(19) Europäisches Patentamt
European Patent Office
Office européen des brevets

(11) EP 0 435 171 B1

(12) EUROPEAN PATENT SPECIFICATION

(45) Date of publication and mention of the grant of the patent:
**18.03.1998 Bulletin 1998/12**

(51) Int Cl.[6]: **C08F 255/00**, C08F 2/18, C08L 101/00 // (C08L101/00, 51:06)

(21) Application number: **90124951.6**

(22) Date of filing: **20.12.1990**

(54) **Sliding property improving agent**

Mittel zur Verbesserung des Schiebewiderstandes

Agent améliorant la résistance à coulisser

(84) Designated Contracting States:
**DE FR GB IT NL SE**

(30) Priority:
**22.12.1989 JP 334474/89**
**19.01.1990 JP 10111/90**
**09.02.1990 JP 31174/90**
**16.02.1990 JP 35268/90**
**06.03.1990 JP 54179/90**
**08.03.1990 JP 57379/90**
**27.03.1990 JP 77997/90**
**13.04.1990 JP 96210/90**

(43) Date of publication of application:
**03.07.1991 Bulletin 1991/27**

(73) Proprietor: **NIPPON OIL AND FATS COMPANY, LIMITED**
**Chiyoda-ku Tokyo (JP)**

(72) Inventors:
- **Yoshitani,Shouichi**
  **Taketoyo-cho, Chita-gun Aichi (JP)**
- **Mizutani, Hiroki**
  **Handa-shi Aichi (JP)**
- **Suzuki, Nobuyoshi**
  **Taketoyo-cho, Chita-gun Aichi (JP)**
- **Ohara, Kazumine**
  **Taketoyo-cho, Chitagun Aichi (JP)**
- **Ohyanagi, Yasushi**
  **Shinjuku-ku Tokyo (JP)**
- **Sekiguchi, Isamu**
  **Sagamihara-shi Kanagawa (JP)**

(74) Representative: **Grünecker, Kinkeldey, Stockmair & Schwanhäusser Anwaltssozietät**
**Maximilianstrasse 58**
**80538 München (DE)**

(56) References cited:
**EP-A- 0 148 743**
**EP-A- 0 201 164**
**EP-A- 0 295 821**
**BE-A- 691 700**

- **JOURNAL OF APPLIED POLYMER SCIENCE, vol. 39, no. 3, 5th February 1990, pages 489-498, New York, US; Y. UYAMA et al.: "Surface lubrication of polymer films by photoinduced graft polymerization"**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 435 171 B1

## Description

This invention relates to a sliding property improving agent, especially applicable to thermoplastic resins, which effectively improves sliding property of the resins, giving no defects to other physical property, mechanical property and thermal property thereof. Resins having improved sliding property by adding said improving resin of this invention may be widely used in the field of electric and electromechanical industries, precision machine industries and automobile industries.

Resins are widely used in many industrial fields as an alternative of metal materials because of their mechanical and electrical characteristics, productivity, anti-corrosive property, anti-abrasion property and light weight property thereof.

One of the advantages of using resin is sliding property and the resin having self-lubricating property is in practical use in the field of automobile industry, building industry and electrical industry. Both thermoplastic resin and thermosetting resin are used where sliding property is required, especially thermoplastic resin is widely used because of the ease and economics of fabrication.

Recently a requirement of sliding property has become higher as the use area of resin expands.

Attempts have been made to improve the sliding property of resins and it has been well known as a method of improving sliding property of resins to add a solid or a liquid luburicant thereto.

Here are some examples of various kind of resins having improved sliding property by adding lubricants or various resins.

Japanese laid open 87-253650(Kokai Sho 62-253650) and 88-37198(Kokai Sho 63-37198) disclose a composition to improve sliding property of a polyoxymethylene resin comprising a poly-acetal, polyethylene with specific MI(melt index) and a conductor which reduces the friction coefficient and squeak while sliding.

Japanese laid open 88-33465(Kokai Sho 63-33465) discloses a polyoxymethylene resin composition produced by uniformly dispersing ultra high molecular weight fine polyethylene powder having a high mouldability property, anti-friction property and anti-abrasion property.

Japanese laid open 85-144351(Kokai Sho 60-144351). corresponding to U. S. Pat No. 4870508. discloses a thermoplastic resin composition comprising a melt mix product of polyoxymethylene and ultra high molecular weight polyethylene powder with specified property, having excellent abrasion resistance, impact resistance and high critical PV limit.

Japanese laid open 87-253851(Kokai Sho 62-253651), corresponding to U.S. Pat. No. 4663391 discloses a polycarbonate resin composition comprising an aromatic carbonate resin and a partially fluorinated polyolefin composition exhibiting improved wear resistance. Japanese laid open 88-162756(Kokai Sho 63-162756) discloses a polycarbonate resin composition comprising an aromatic carbonate resin and a fluorinated polyolefin, a polyolefin, or a silicone liquid composition also exhibiting improved wear resistance.

Japanese laid open 88-182361(Kokai Sho 63-182361) discloses a styrene resin composition containing rubber modified styrene resin, polyolefin resin, styrene-olefin, graft or block copolymer and dimethylsilicon having an improved sliding property, and Japanese laid open 89-201351 (Kokai Hei 01-201351) discloses a styrene resin composition having an improved sliding property containing silicone oil and tin stabilizer, used for sliding part of a gear or a cam.

With regard to improving sliding property of thermoplastic polyester resin, Japanese laid open 84-170138 (Kokai Sho 59-170138) discloses a polyester resin having improved sliding property containing thermoplastic polyester resin, solid lubricant, lubricating oil and polyoxyalkylene compounds, Japanese laid open 89-140253 (Kokai Sho 59-140253) discloses a polybutylene terephthalate resin composition for frictional material prepared by adding potassium titanate fiber and fluorocarbon resin to polybutylene terephthalate resin having improved sliding property, Japanese laid open 88-213551 (Kokai Sho 63-213551) discloses a resin composition containing polybutylene terephthalate resin mixed with tetrafluoroethylene resin, reinforcing material and solid lubricant, and Japanese laid open 88-297455 (Kokai Sho 63-297455) discloses a polyester resin composition containing dispersed carbon fiber and ultra high molecular weight polyethylene having good sliding property.

For improving sliding property of polyarylene sulfide resin, Japanese laid open 75-119040(Kokai Sho 50-119040) discloses a polyphenylene sulfide resin containing tetrafluoroethylene resin as a lubricant.

Japanese laid open 77-129761(Kokai Sho 52-129761), or Japanese patent publication 81-50124(Kokoku sho 56-50124) discloses a polyphenylene sulfide resin containing a graphite, polytetrafluoroethylene resin and lubricating oil as a lubricant.

Japanese laid open 76-28145(Kokai Sho 51-28145), or Japanese patent publication 82-13586(Kokoku sho 57-13586) discloses a polyphenylene sulfide resin containing a molybdenium disulfide and a carbon fiber having improved sliding property.

Japanese laid open 85-228558(Kokai Sho 60-228558) discloses a polyphenylene sulfide resin containing a fiber reinforcement, tetrafluoroethylene resin powder, and an inorganic filler having cleavage property.

And Japanese laid open 87-232457(Kokai Sho 62-232457) discloses a polyphenylene sulfide resin containing a

tetrafluoroethylene resin, a reinforcing filler and a specified organic silane.

For improving sliding property of polyamide resin, Japanese laid open 85-96649(Kokai Sho 60-96649) corresponding to U. S. Pat. No. 4563495, discloses a polyamide resin containing a high density polyethylene powder, and potassium titanate whisker having good sliding property, Japanese laid open 85-144351(Kokai Sho 60-144351) corresponding to U. S. Pat. No. 4670508 discloses a polyamide resin mixed with a ultra high molecular weight polyethylene powder having a specified particle size having good sliding property, and Japanese laid open 87-218453(Kokai Sho 62-218453) discloses a polyamide resin mixed with a carbon fiber and a specified molecular weight polyethylene.

Further for improving sliding property of polyphenylene ether resin, Japanese laid open 85-188560(Kokai Sho 60-186560) discloses a polyphenylene ether resin blended with a polyamide elastomer improving frictional property and abrasion property.

For improving sliding property of polyarylate resin, Japanese laid open 84-179662(Kokai Sho 59-179662) discloses a polyarylate resin containing a lubricating oil, a lubricating oil carrier, a mica, and solid lubricant.

EP-A-295 821 discloses a method for producing a graft resin composition from a propylene polymer and a vinyl monomer.

But there are some defects in the above mentioned prior arts, for instance, in a composition to improve sliding property of a polyoxymethylene resin disclosed in Japanese laid open 87-253650(Kokai Sho 62-253650) and Japanese laid open 88-37198(Kokai Sho 63-37198), the polyethylene is melted, then kneaded and dispersed into a polyoxymethylene resin but a compatibility of polyethylene with polyoxymethylene is not large enough so that the basic nature and properties of the resin, such as mechanical strength and heat resistance are adversely affected. And moreover a surface of a molded product often causes a delamination and the mixed resin adheres to the cavity of mold after molding.

A thermoplastic resin composition comprising a melt mix product of polyoxymethylene and ultra high molecular weight polyethylene powder with specified property disclosed in Japanese laid open 85-144351(Kokai Sho 60-144351), corresponding to U. S. Pat. No4670508, in which ultra high molecular weight polyethylene powder is dispersed in the system as comparatively large sized particles, reduction effect of the friction coefficient of the resin is not successful.

A polycarbonate resin is disclosed in Japanese laid open 87-253651(Kokai Sho 62-253651), and Japanese laid open 88-162756(Kokai Sho 63-162756) having improved sliding property by blending a fluorinated polyolefin solely, or blending a fluorinated polyolefin, a polyolefin and a silicone liquid composition, which exhibits improved wear resistance, but compatibility of the polycarbonate resin with fluorinated polyolefin, a polyolefin, and a silicone liquid is not large enough, consequently preferable physical and mechanical property of the polycarbonate resin is affected adversely, and resulting products show bleeding phenomenon, surface delamination or adhering to a cavity of the mold.

Although a styrene resin composition containing rubber modified styrene resin, polyolefin resin, styrene-olefin, graft or block copolymer and dimethylsilicon disclosed in Japanese laid open 88-182361(Kokai Sho 63-182361), exhibits a slightly improved sliding property, the resulting product resin does not exhibit a good mechanical property but shows a surface delamination, and bleeding phenomenon, which are all adverse effects.

And a styrene resin composition blended with silicone cil and tin stabilizer, disclosed in Japanese laid open 89-201351 (Kokai Hei 01-201351) exhibits an improved anti-burned spot property when molding but the effect of exhibiting a decrease of burned phenomenon of resin when molding, is still not satisfactory.

A thermoplastic polyester resin, containing solid lubricant, lubricating oil and polyoxyalkylene compounds disclosed in Japanese laid open 84-170138(Kokai Sho 59-170138), exhibits a slightly improved sliding or friction resistance property but lubricating oil often blots out to the surface of the products and the surface thereof becomes sticky.

Thermoplastic polyester resin blended with a fluorine resin or a ultra high molecular weight polyethylene having improved sliding property disclosed in Japanese laid open 84-140253, 88-213551 and 88-297455 exhibits a slightly improved sliding property but compatibility of the fluorine resin or ultra high molecular weight polyethylene with the thermoplastic polyester resin is not large enough so that basic nature and properties of the thermoplastic polyester resin are adversely affected, specifically mechanical strength thereof is badly affected, the surface delamination of the products occurs and the mixed resin adheres to the cavity of mold after molding.

A polybutylene terephthalate resin composition prepared by adding potassium titanate fiber and fluorocarbon resin thereto disclosed in Japanese laid open 89-140253 (Kokai Sho 59-140253), a resin composition containing polybutylene terephthalate resin mixed with tetrafluoroethylene resin, reinforcing material and solid lubricant disclosed in Japanese laid open 88-213551 (Kokai Sho 63-213551) and a polyester resin composition containing dispersed carbon fiber and ultra high molecular weight polyethylene disclosed in Japanese laid open 88-297455 (Kokai Sho 63-297455) exhibit improved sliding property but because of poor compatibility of the tetrafluoroethylene resin and of the ultra high molecular weight polyethylene with the thermoplastic polyester resin, the thermoplastic polyester resin could not exhibit basic physical and mechanical property and more than that the surface delamination and adhesion to the cavity of the mold is a big problem.

Polyarylene sulfide resin disclosed in Japanese laid open 75-119040, 77-129761, Japanese patent publication 81-50124, 82-13586, and Japanese laid open 85-228558, containing tetrafluoroethylene resin or solid lubricant such as, molybdene disulfide and graphite exhibits a slightly improved sliding property but abrasion resistance of these

resins decreases in case a comparatively large amount of the solid lubricant is added. Especially, when a tetrafuloroethylene is blended with polyarylene sulfide resin, the compatibility of the tetrafluoroethylene with polyarylene sulfide resin is not sufficient, mechanical property and surface condition of the resulted resin decreases as the tetrafluoroethylene sometimes coagulates and does not disperse uniformly.

To solve the problem of poor compatibility of the tetrafluoroethylene with polyarylene sulfide resin, a specified organic silane is added as disclosed in Japanese laid open 88-232457 but the result is still not satisfactory.

Polyamide resins disclosed in Japanese laid open 85-96649, 85-144351, 87-218453 containing a high density polyethylene resin, an ultra high molecular weight polyethylene or a polyethylene for the purpose of improving sliding property, have defects in physical and mechanical property, and the resin adheres to a cavity of mold after molding and the delamination of the surface of the product sometimes occurs because the compatibility of polyethylene resin with polyamide is not essentially large enough.

Polyphenylene ether resin disclosed in Japanese laid open 85-186560, exhibits a slightly improved abrasion resistance but the friction coefficient of the resin is not improved.

Polyarylate resin disclosed in Japanese laid open 84-179662 shows improved frictional property and anti abrasion property but lubricating oil bleeds out to the surface thereof and causes a damage to the surface and mechanical property of the resin decrease because of poor compatibility of the lubricating oil and solid lubricant with the resin.

As discussed above, so far, thermoplastic resins having improved sliding property by adding conventional solid or liquid lubricant or various resins lost the basic mechanical property of the resin.

The object of the invention is to provide a sliding property improving agent which does not give adverse affects to the mechanical strength of the resin.

## SUMMARY OF THE INVENTION

This invention is directed to a sliding property improving agent. A sliding property improving agent comprising a multi phase structure thermoplastic resin, which consists of 6 to 95 parts by weight of a non-polar α-olefin polymer(a) and 95 to 5 parts by weight of a vinyl polymer (b), polymer (b) being dispersed in polymer (a) or vice versa and the dispersed polymer has a particle size from 0.001 to 10 μm.

The resulted polymer improves a sliding property of the thermoplastic resins and shows constant friction reduction effects under various conditions and at the same time also provides a satisfactory mechanical property and heat resisting property to the resin.

## DETAILED DESCRIPTION OF THE INVENTION

The inventors of this invention reached the conclusion through the intensive research that a specified multi phase structure thermoplastic is used as a sliding property improving agent without affecting the mechanical property and heat resistance of the resin.

Preferable examples of the non-polar α-olefin polymer of this invention are an ethylene series polymer, more specifically selected at least one from polyethylene, polypropylene, ethylene and α-olefin copolymer, ethylene, α-olefin and non-conjugate diene copolymer, and ethylene and polar vinyl monomer copolymer.

The polyethylene applicable to this invention is prepared by high pressure radical polymerization or low or middle pressure ion polymerization of ethylene monomer.

The polypropylene employed in this invention is prepared by ion polymerization of propylene monomer.

A weight ratio of ethylene and α-olefin in the ethylene and α-olefin copolymer may be from 95:5 to 5:95, where the α-olefin monomer is an unsaturated hydrocarbon haying carbon atoms from 3 to 20, for instance propylene, butene-1, pentene-1, hexene-1. heptene-1, octene-1, 4-methyl butene-1, 4-methyl pentene-1. The most preferable compound is propylene.

The α-olefin monomers employed in the ethylene, α-olefin and non-conjugate diene copolymer is an unsaturated hydrocarbon having carbon atoms from 3 to 20, for instance, propylene, butane-1, pentene-1, hexene-1, heptene-1, octene-1, 4-methyl butene-1, 4-methyl pentene-1.

Examples of the non-conjugated diene employed in this invention are for instance, ethylidene norbornane, 1,4-hexadiene, 1,5-hexadiene, dicyclopentadiene, 2-methyl-1,5-hexadiene, 1,4-cycloheptadiene, or 1,4-cyclooctadiene.

Examples of the ethylene, α-olefin and non-conjugated diene copolymer employed in this invention are ethylene-propylene-ethylidenenorbornane copolymer rubber, ethylene-propylene-1, 4-hexadiene copolymer rubber, or ethylene-propylene-dicyclopentadiene rubber.

The polar vinyl monomer used in the copolymer consisting of ethylene and polar-vinyl monomer employed in this invention is a monomer having vinyl group copolymerizable with ethylene, more specifically, for example, α,β-unsaturated carboxylic acid or metal salt thereof such as, acrylic acid, methacrylic acid, fumaric acid, maleic acid, maleic acid anhydride, Itaconic acid, itaconic acid anhydride, and bicyclo(2,2,1)-5 heptene-2,3-dicarbonic acid, α,β-unsaturated

carbonic ester such as, methyl acrylate, n-butyl acrylate, isobutyl acrylate, t-butyl acrylate, 2 ethylhexyl acrylate, methyl methacrylate, ethyl methacrylate, n-butyl methacrylate, and isobutyl methacrylate, vinyl ester such as, vinyl acetate, vinyl propionate, vinyl capronate, vinyl caprylate, vinyl laurinate, vinyl stearate, and vinyl trifluoroacetate, or unsaturated glycidyl containing monomer such as glycidyl acrylate, glycidyl methacrylate, and itaconic acid monoglycidyl ester.

Examples of the ethylene and polar vinyl monomer copolymer employed in this invention are ethylene-acrylic acid copolymer, ethylene-methyl acrylate copolymer, ethylene-ethylacrylate copolymer, ethylene-isopropylacrylate copolymer, ethylene-n-butyl acrylate copolymer, ethylene-isobutyl acrylate copolymer, ethylene-2-ethylhexyl acrylate copolymer, ethylene-methyl methacrylate copolymer, ethylene-ethyl methacrylate copolymer, ethylene-n-butyl methacrylate, ethylene-isobutyl methacrylate copolyner, ethylene-vinyl acetate copolymer, ethylene-vinyl propionate copolyner, ethylene-ethyl acrylate-maleic acid anhydride copolymer, ethylene-ethyl acrylate-glycidyl methacrylate copolymer and ethylene-glycidyl methacrylate copolymer.

Examples of the vinyl copolymer employed in the multi phase structure thermoplastic resin of this invention are polymers obtained by polymerizing 1 or more than 2 of vinyl monomers described as follows: an aromatic vinyl monomer such as, styrene, nuclear substituted styrene(for instance, methyl styrene, ethyl styrene, isopropyl styrene, chlorostyrene or the like), and α-substituted styrene(for instance, α-methyl styrene, α-ethyl styrene or the like);

a (meth)acrylic acid ester monomer such as, (meth)acrylic acid alkyl ester in which the carbon number of the alkyl is from 1 to 7, (for instance, methyl-, ethyl-, propyl-, isopropyl-, butyl-, or the like (meth)acrylate);
a (meth)acrylic acid hydroxyalkyl ester monomer such as, 2-hydroxyethylmethacrylate, hydroxypropylmethacrylate, polyethylene glycole mono methacrylate, polypropyrene glycole mono methacrylate or the like; vinyl cyanide monomer such as, acrylonitrile or methacrylonitrile;
a vinyl ester monomer such as, vinyl acetate, and vinyl propionate;
a (meth)acrylamide monomer such as, acrylamide, or methacrylamide;
a vinyl monomer derivatives of an unsaturated carboxylic acid[for instance, (meth)acrylic acid, maleic acid, fumaric acid, itaconic acid, citraconic acid, crotonic acid] or amid, imide, ester, and anhydride thereof.

More preferably, aromatic vinyl monomer, (meth)acrylic acid ester monomer, vinyl cyanide monomer, or vinyl ester monomer are employed in this invention.

Especially, a vinyl copolymer consisting of 0 to 50% by weight of vinyl cyanide monomer and 50 to 100% by weight of aromatic vinyl monomer or a vinyl polymer containing more than 50% by weight of (meth)acrylic acid ester is the best example of this invention since these compounds have excellent dispersing property into thermoplastic resins.

In this specification, the multi phase structure thermoplastic resin is defined as follows;

A thermoplastic resin consisting of a non-polar α-olefin polymer or a vinyl polymer matrix, containing a different non-polar α-olefin polymer or a different vinyl polymer from said polymer matrix, having spherical shape and being dispersed uniformly and insularly therein or vice versa.

The diameter of said dispersed polymer ranges from 0.001~10μm, more preferably 0.001~5μm.

In case the diameter of said dispersed resin is less than 0.001μm or larger than 5μm, a dispersing degree thereof is no longer acceptable when blended with thermoplastic resin and the surface appearance of the resulting products becomes poor or the mechanical property of said resin is adversely affected.

The mean number degree of polymerization of said vinyl polymer employed in this multi phase structure thermoplastic resin is 5~10,000, more preferably 10~5,000.

If said mean number degree of polymerization is less than 5, however, the sliding property improving effect is accomplished but the dispersing property of said sliding property improving agent is not sufficient, accordingly mechanical property of said resin is no longer in good condition. On the other hand in case said mean number degree of polymerization is larger than 10,000, the viscosity of said resin becomes high, therefore the molding property of said resin decreases and the surface gloss of said products also becomes poor.

The multi phase structure thermoplastic resin improving sliding property consists of from 5% to 95% by weight of non-polar α-olefin polymer, more preferably from 20% to 90% by weight. Accordingly said vinyl polymer in said multi phase structure thermoplastic resin is from 95% to 5% by weight, more preferably fron 80% to 10% by weight.

If said non-polar α-olefin polymer is less than 5 % by weight, degree of effectiveness as a sliding property improving agent is not sufficient and unfavorable. Inversely, if the amount of said non-polar α-olefin polymer exceeds 95% by weight, the degree of effectiveness as a sliding property improving agent is good enough but mechanical property of said resin and heat resistance are adversely affected.

It is possible to employ a well known conventional graft polymerization method such as, chain transfer method or ionizing radiation induced polymerization for making said multi phase structure thermoplastic resin of this invention but the most preferred method of making said thermoplastic resin is described as follows. According to the methods described hereinafter one can produce the thermoplastic resin having very fine and uniform particle diameter, and no secondary heat coagulaton property. Therefore the degree of effectiveness as a sliding property improving agent increases.

Now, methods of making said multi phase structure thermoplastic resin used as a sliding property improving agent are specifically described in detail.

First, said multi phase structure thermoplastic resin is prepared by suspending 100 parts by weight of a non-polar α-olefin polymer in water, and a solution separately prepared by dissolving from 5 to 400 parts by weight of at least one vinyl monomer and disolving 0.01 to 5 parts by weight(with respect to 100 parts by weight of the vinyl polymer) of radical polymerization initiator having decomposition temperature of 40 to 130°C for 10 hour half life is added to said suspension. The weight ratio of said vinyl monomer(s) and said radical polymerization initiator is 100:0. 01~100:5.

Heating said resultant mixture under a condition that said radical polymerization initiator does not substantially start decomposing, causing impregnation of non-polar α-olefin polymer with said vinyl monomer(s) and said radical polymerization initiator.

Ascending the temperature of said water suspension when said degree of the impregnation exceeds 10% by weight of the initial amount, and polymerizing said vinyl monomer(s) inside said non-polar α-olefin polymer. Hereinafter said obtained non-polar α-olefin polymer impregnated with polymerized vinyl monomer is referred to as polymer (A).

The polymer (A) is a multi phase structure thermoplastic resin according to the definition so said polymer (A) itself may be used as a sliding property improving agent.

The polymer (A) melted end kneaded at the temperature of 100 to 300°C is also a multi phase structure polymer which is effective as a sliding property improving agent.

A multi phase structure thermoplastic resin is obtained by blending said polymer (A) with less than 99% by weight of non-polar α-olefin or less than 99% by weight of vinyl monomer and by kneading under melt condition.

A multi phase structure thermoplastic resin is also obtained by blending said polymer (A) with less than 99% by weight of non-polar α-olefin and less than 99% by weight of vinyl monomer and by kneading under melt condition.

The best sliding property Improving agent among the above mentioned thermoplastic resin is the melted and kneaded polymer (A).

Now another method of making a multi phase structure thermoplastic resin is suspending 100 parts by weight of a non-polar α-olefin polymer in water, adding to said suspension a solution separately prepared by dissolving from 5 to 400 parts by weight of at least one vinyl monomer, disolving 0.1 to 10 parts by weight (with respect to 100 parts by weight of the vinyl monomer) of a radical polymerizable organic peroxide described as general formula (a) or (b), or a mixture of more than 2 of said radical polymerizable organic peroxides described as general formula (a) or (b), and from 0.01 to 5 parts by weight (with respect to 100 parts by weight of said vinyl monomer(s) and said radical polymerizable organic peroxide) of a polymerization initiator having a decomposition temperature of 40 to 90°C for 10 hour half life, heating said resultant mixture under a condition that said radical polymerization initiator does not substantially start decomposing, thereby causing impregnation of non-polar α-olefin polymer with said vinyl monomer(s), said radical polymerizable organic peroxide, and said radical polymerization initiator, ascending the temperature of said water suspension when said degree of the impregnation exceeds 10% by weight of the initial amount and copolymerizing said vinyl monomer(s) and said radical polymerizable organic peroxide inside said non-polar α-olefin polymer. Hereinafter said obtained non-polar α-olefin polymer impregnated with said copolymerized vinyl monomer and said radical polymerizable organic peroxide is referred to as polymer(B).

Said polymer (B) is a multi phase structure thermoplastic resin according to the afore mentioned definition so said polymer (B) by itself may be used as a sliding property improving agent.

Said polymer (B) melted and kneaded at the temperature of from 100 to 300°C, is also a multi phase structure thermoplastic resin which is effective as a sliding property improving agent.

A multi phase structure thermoplastic resin is obtained by blending said polymer (B) with less than 99% by weight of a non-polar α-olefin or less than 99% by weight of a vinyl monomer and by kneading under melt condition.

A multi phase structure thermoplastic resin is also obtained by blending said polymer (B) with less than 99% by weight of a non-polar α-olefin and less than 99% by weight of a vinyl monomer and by kneading under melt condition.

The best sliding property improving agent among the above mentioned thermoplastic resin is said kneaded polymer (B) containing a graft copolymer.

The radical polymerizable organic peroxide described as general formula (a) is as follows;

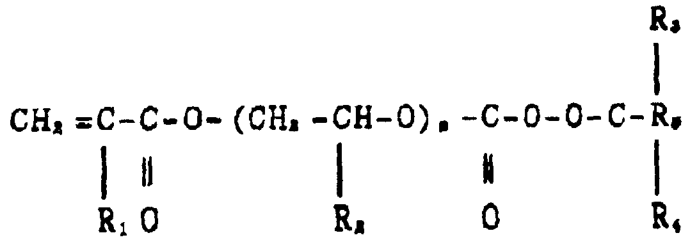

(where $R_1$ is a hydrogen atom or an alkyl group having 1 to 2 carbon atoms, $R_2$ is a hydrogen atom or a methyl group, $R_3$ and $R_4$ are alkyl groups with 1 to 4 carbon atoms and $R_5$ is an alkyl group having 1 to 12 carbon atoms, a phenyl group or an alkyl-substituted phenyl group having 1 to 12 carbon atoms or a cycloalkyl group having 3 to 12 carbon atoms, and m is an integer of 1 or 2.)

The radical polymerizable organic peroxide described as general formula (b) is as follows;

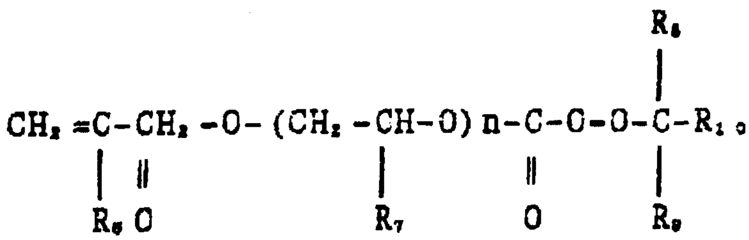

(where $R_6$ is a hydrogen atom or an alkyl group having 1 to 4 carbon atoms, $R_7$ is a hydrogen atom or a methyl group, $R_8$ and $R_9$ are alkyl groups having 1 to 4 carbon atoms, $R_{10}$ is an alkyl group having 1 to 12 carbon atoms, a phenyl group or a substituted alkyl-phenyl group or a cycloalkyl group having 3 to 12 carbon atoms, and n is an integer of 0, 1 or 2.)

Radical polymerizable organic peroxides disclosed in Japanese laid open 89-131220(Kokai Hei 1-131220) may be employed as radical polymerizable organic peroxide described as general formula (a) and (b).

Preferable compounds are

t-butylperoxyacryloyloxyethylcarbonate,
t-butylperoxymethacryloyloxyethylcarbonate,
t-butylperoxyarylcarbonate,
and t-butylperoxymetharylcarbonate.

The multi phase structure resin according to this invention ought to have a structure that in a vinyl polymer or a non-polar α-olefin polymer matrix a different α-olefin polymer or a different vinyl polymer respectively is dispersed uniformly and isularly but said matrix and said dispersed polymer is not necessarily chemically bonded such as, graft copolymerization.

However it is much more preferable that said matrix and said dispersed polymer is chemically bonded, because a degree of effectiveness as a sliding property improving agent increases.

Further when lubricating material is added to said multi phase structure thermoplastic resin within a range of 0.1% to 50% by weight, then the sliding property improving effect is far more improved.

But if the amount of the lubricating material is less than 0.1% by weight, the improving effect is comparatively low and on the other hand if the amount exceeds 50% by weight, the mechanical property of the products and the surface appearance are adversely affected.

Examples of lubricating material employed in this invention are conventional lubricating material which has been used for improving sliding property of resins such as, mineral oil for instance, spindle oil, freezer oil, turbine oil, machine oil, cylinder oil, gear oil; hydrocarbons for instance, liquid paraffine, paraffine wax, polyethylene wax; fatty acid such as lauric acid, myristic acid, paltimic acid, stearic acid, arachidonic acid, behenic acid, montanic acid; alcohol for instance, hexyl alcohol, octyl alcohol, cetyl alcohol, stearyl alcohol, behenyl alcohol, glycol, glycerin, polyglycerol, pentaerythritol; fatty acid ester for instance, stearyl stearate, behenyl beherate, pentaerythritol tristearate, pentaerythritol tetrastearate, glycerin mono stearate, glycerin mono behenate; fatty acid amide for instance, stearamide, palmitamide,

oreylamide, ethylenebisstearoamide; metallic soap for instance, calcium stearate, zinc stearate, magnesium stearate; natural wax for instance, montan wax; and silicone and a mixture of these lubricating material may also employed in this invention.

Fatty acid, alcohol, fatty acid ester, silicone and mineral oil are preferably employed in this invention.

Sliding property improving agent according to the invention is preferably applied to thermoplastic resins, more specifically, polyoxymethylene resin, polycarbonate resin, styrene resin, polyester resin, polyarylenesulfide, polyamide, polyphenylene ether, and polyarylate, and mixtures thereof.

Examples of polyoxymethylene are oxymethylene homopolymer, and copolymer or terpolymer thereof which comprises mostly of oxymethylene monomer, such as disclosed in Japanese laid open 88-344(Kokai Sho 63-344).

Examples of polycarbonate resin are 4,4-dihydroxydiphenyl 2,2-propane, (usually referred as bisphenol A), and 4,4-dioxyarylalkan polycarbonate, such as, disclosed in Japanese laid open 87-253651(Kokai Sho 62-253651).

Examples of styrene resin applicable to the invention are disclosed in Japanese laid open 88-248836(Kokai Sho 63-248836).

Especially polystyrene, styrene-butadiene copolymer, styrene-acrylonitrile copolymer, and styrene-butadiene-acrylonitrile copolymer are preferably employed in this invention.

Examples of thermoplastic polyester resin are disclosed in Japanese laid open 84-170138(Kokai Sho 59-170138). Especially polyethyleneterephthalate and polybutyleneterephthalate are preferably employed in the invention.

Examples of arylene sulfide resin are disclosed in Japanese patent publication 70-3368(Kokoku Sho 45-3368), Japanese patent publication 77-12240(Kokoku Sho 52-12240), Japanese laid open 78-136100(Kokai Sho 53-136100), Japanese laid open 86-7332(Kokai Sho 61-7332) and Japanese laid open 88-39926(Kokai Sho 63-39926). Especially polyphenylene sulfide resin having either crosslinking structure or linear structure is preferable employed in the invention.

Examples of polyamide resin is disclosed in Japanese laid open 85-144351(Kokai Sho 60-144351). Especially aliphatic polyamide resin such as, nylon 6, nylon 66, nylon 610, nylon 11, nylon 12, nylon 612, and nylon 46, and aromatic polyamide resin such as, polyhexadiamineterephthalamide, polyamide resin having xylene group are preferably employed in the invention.

Examples of polyphenylene ether resin are polyphenylene ether homo polymer or copolymer, obtained by polycondensating monocyclic phenol of more than one kind such as, 2,6-dinethyl phenol; or a composition comprising of polyphenylene ether resin and aromatic vinyl polyner such as, polystyrene reinforced with rubber disclosed in Japanese laid open 85-186560(Kokai Sho 60-186560).

Examples of polyarylate resin is a polyester obtained by polymerizing bisphenol and terephthalic acid and/or isophthalic acid disclosed in Japanese laid open 39-268751(Kokai Hei 1-268751).

The proper amount of sliding property improving agent of this invention added to the resins is within a range of 0.1% to 50% by weight with respect to said thermoplastic resin.

In case the amount of the sliding property improving agent is less than 0.1% by weight, the degree of effectiveness of improving is not sufficient, and on the other hand in case the amount exceeds 50% by weight, mechanical property and heat resistance of the resin are adversely affected.

It is also possible to add additives described below to the system within in the scope of this invention.

Additives:

Inorganic fire retardant such as, magnesium hydroxide and aluminum hydroxide; organic fire retardant such as, fire retardant containing halogen and phosphorus; particle filler such as, calcium sulfate, calcium silicate, clay, diatomaceous earth, talc, alumina, silica sand, glass powder, iron oxide, metal powder, graphite, silicon carbide, silicon nitride, silica, boron nitride, aluminum nitride, carbon black, and molybdenum disulfide;

scaled or plate like filler such as, mica, glass plate, sericite, pyrophyllite, metal powder, for instance, aluminum flake, and graphite;
hollow filler such as, silas baloon, metal baloon, glass baloon and and pumice stone; fibrous filler such as, glass fiber, carbon fiber, silicon carbide fiber, and mineral fiber such as, asbestos and wollastonite;
monocrystalin fibrous filler such as, potassium titanate whisker, calcium sulfide whisker, and carbon whisker; organic filler such as, wood particle;
additives such as, antioxidant, anti-ultraviolet ray agent, lubricant, dispersing agent, coupling agent, foaming agent, cross linking agent, and coloring agent; and engineering plastics such as, polyolefin resin, polyoxymethylene resin, polyamide resin, polyester resin, polycarbonate resin, ABS resin, polyphenylene sulfide resin, polyarylate resin and fluorine-containing polymers.

DESCRIPTION OF THE EMBODIMENT

The invention of this application will be more specifically explained in detail with embodiments.

The kinetic friction coefficient is measured under the condition described below throughout the examples and comparative examples of the invention.

MEASUREMENT OF THE DYNAMIC FRICTION COEFFICIENT

| | | |
|---|---|---|
| Tester: | Friction Abrasion Tester manufactured by Orientec Model EFM-III-F(High speed type) | |
| Counter member: | cylindrical member having outer diameter of 25.6mm and inner diameter of 20mm. Material: S45C | |
| Test piece: | 30mmx30mm, 3mm thick | |
| Test condition: | loading pressure: | $5kg/cm^2$, velocity: 30cm/sec or $5kg/cm^2$, velocity: 80cm/sec |

Test of tensile strength, flexural modulus, and heat deflection temperature is conducted complying with the Japanese Industry Standard (JIS).

| | | |
|---|---|---|
| Tensile Strength: JIS K-7113 | test velocity | 10mm/min. |
| Flexural Modulus: JIS K-7203 | test velocity | 2mm/min. |
| Heat Deflection Temperature: JIS K-7207 | loading pressure | $18.5kg/cm^2$ |

The appearance of the product made by injection molding was tested by the naked eyes whether surface delamination or surface separation of the product is observed.

[Reference example 1~9]

Production of multi phase structure thermoplastic resin (A~I):

2500g of pure water is poured into a stainless steel autoclave of 51 volume, and 2.5g of polyvinyl alcohol was dissolved in said pure water as a suspension. Then 700g of low density($0.924g/cm^2$) polyethylene as a non-polar α-olefin polymer(manufactured by Nippon Petroleum Chemical Co.Ltd., Trade name :LEXLON F41) is mixed and dispersed into said suspension. 1.5g of benzoil peroxide as a radical polymerization initiator (manufactured by Nippon Oil & Fats Co., Ltd., Trade name is NYPER-B), 6g of t-butylperoxymethacryloyloxyethyl carbonate as a radical polymerizable organic peroxide was dissolved and agitated with the mixture of 210g of styrene monomer and 90g of acrylonitrile as a vinyl monomer and said solution was poured into said autoclave and agitated therewith. A temperature of the autoclave is elevated up to 60~65°C and agitated for 2 hours to have the polyethylene impregnated with said vinyl monomer containing radical polymerization initiator and radical polymerizable organic peroxide.

When the total amount of vinyl monomer, radical polymerization initiator and radical polymerizable peroxide is confirmed to be over 10% of the initial amount thereof, then the temperature of the autoclave was raised up to 80 to 85°C and was maintained at this temperature for 7 hours for completion of the polymerization. The resulting product was washed and dried and polymer (A') was obtained.

Styrene-acrylonitrile copolymer involved in said product polymer (A') was extracted by using ethyl acetate, and the mean number degree of polymerization of said polymer was measured by GPC and found to be 900. Said polymer (A') was extruded using a Laboplast Mill single screw extruder (manufactured by Toyo Seiki Seisakusho Co., Ltd. ) at a temperature of 200°C. Thereby multi phase structure thermoplastic (A) was obtained. And the resulting phase structure thermoplastic resins were observed through electron microscope.

According to the observation through electron microscope(JEOL JSM T 300, manufactured by Nihon Denshi Co., Ltd., ), the multi phase structure thermoplastic resin consists of uniformly dispersed particle resins having a perfect sphere shape and a diameter of 0.3~0.4μm. At this time, graft efficiency of the acrylo-nitrile copolymer was 62.3% by weight. According to the method described above, the other multi phase structure thermoplastic resins B~I were also made varying the amount and the species of the non-polar α-olefin polymer as described in table 1.

[Reference example 10]

Production of vinyl polymer (i):

2500g of pure water is poured into a stainless steel autoclave with volume of 51, and 2.5g of polyvinyl alcohol was dissolved in said pure water as a suspension.

Then 5g of benzoil peroxide as a radical polymerization initiator(manufactured by Nippon Oil & Fats co.,Ltd., Trade name NYPER-B) is dissolved with a mixture of 700g of styrene monomer and 300g of acrylonitrile monomer as a vinyl monomer, and said solution is added to the suspension and agitated in the autoclave.

The temperature of the autoclave was elevated up to 80~85°C and maintained at this level for 7 hours for completion of the polymerization. The resulting product was washed and dried and styrene-acrylonitrile copolymer as a vinyl polymer(i) is obtained.

The mean number degree of polymerization of said styrene styrene-acrylonitrile copolymer was measured as 850.

[Reference example 11]

Production of vinyl polymer (ii).

In example 10, 1000g of methylmethacrylate monomer was employed as a vinyl monomer instead of the mixture of 700g of styrene monomer and 300g of acrylonitrile monomer, and 2g of n-dodecyl mercaptan as a molecular weight adjusting agent is added to the system. The rest is as same as example 10.
Then methylmethacrylate as a vinyl polymer (ii) is obtained of which the mean number degree of polymerization is 730.

[Reference example 12]

Production of vinyl polymer (iii)

In example 10, 1000g of styrene monomer was employed as a vinyl monomer instead of the mixture of 700g of styrene monomer and 300g of acrylonitrile monomer.

The rest is as sane as example 10.
Then styrene polymer as a vinyl polymer (iii) is obtained of which the mean number degree of polymerization is 820.

[Reference example 13~18]

Production of multi phase structure thermoplastic resin:

A polymer selected from polymers (A'~C') obtained in the examples 1~3 and a low density polyethylene (Manufactured by Nippon petroleum Chemical Co., Ltd., Trade name Lexlon) as a non-polar α-olefin polymer or a vinyl polymer selected from polymers (i~iii) obtained in the examples 10~12 were blended as indicated in table 2 and extruded using a Laboplast Mill single screw extruder (manufactured by Toyo Seiki Seisakusho Co., Ltd.) at temperature 200°C. The resulting products of multi phase structure thermoplastic resins (J~0) were obtained.

[Reference example 19~21]

Production of multi phase structure thermoplastic resins (P~U) :

In example 1, t-butylperoxymethacryloyloxyethyl carbonate as a radical polymerizable organic peroxide was excluded and the rest is the same as example 1. Then multi phase structure thermoplastic resins P~U indicated in table 3 were obtained.

[Reference example 22~27]

Production of multi phase structure thermoplastic resins (V~a) :

A multi phase structure thermoplastic resin selected from polymers prepared in the reference examples 19~21 and a low density polyethylene (Manufactured by Nippon petroleum Chemical Co., Ltd., Trade name Rexlon) as a non-polar α-olefin polymer or a vinyl polymer selected from polymers (i~iii) prepared in the reference examples 10~12 were blended as indicated in table 4 and extruded using a Laboplast Mill single screw extruder(manufactured by Toyo Seiki Seisakusho Co., Ltd.) at a temperature 200°C. The resulting products of multi phase structure thermoplastic resins (V~a) were obtained.

[Reference example 28~35]

Production of multi phase structure thermoplastic resins (b~i) :

A lubricating material selected from stearyl stearate (Manufactured by Nippon Oil & Fats Co.,Ltd.,Trade name Unistar M9676), mineral oil (Manufactured by Idemitsu Kosan Co., Ltd., Trade name Dafny mechanic oil #100) and dimethyl polysiloxane(Manufactured by Toray Silicone Co., Ltd., Trade name SH 200) was added to a multi phase structure thermoplastic resin selected from polymers prepared in the reference examples 1, and 19~21 were blended as indicated in table 5. Resulting products of multi phase structure thermoplastic resins(b~i) were obtained as shown in table 5.

[Example 1~20]

A polyoxymethylene(Manufactured by Polyplastics Co.,Ltd., Trade name Duracon M90-01) and a sliding property improving agent(multi phase structure thermoplastic resin) prepared in reference examples were blended as shown in table 6 using a twin-screw extruder (Manufactured by Kurimoto Iron Works Co., ltd., Trade name KRC Kneader type S-1) at temperature 210°C. A test piece was made using a injection molding machine (Manufactured by Tabata Machine Co., Ltd., Trade name TS-35-FV25) at a temperature of 200°C and was subjected to various tests as shown in table 6 such as, tensile strength test, flexural modulus test, heat deflection test, and kinetic friction measurement test (against steel: test condition:5kg/cm$^2$, linear velocity:30cm/sec.)

Results of the tests are also shown in table 6.

[Comparative example 1~16]

A test piece was also made according to the method described above except that an amount of multi phase structure thermoplastic resin is different from that of examples 1~20 or a polyethylene resin was employed in place of said multi phase structure thermoplastic resin as shown in table 7 and tested.

Test results are shown in table 7.

[Example 21~46]

A polycarbonate resin (Manufactured by Teijin Kasei Co.,Ltd., Trade name Panlite L-1250), a glass fiber(as an inorganic filler) having mean fiber length of 3.0mm and diameter of 13µm, and a sliding property improving agent (multi phase structure thermoplastic resin) prepared in reference examples were blended as shown in table 8 using a twin-screw extruder (Manufactured by Kurimoto Iron Works Co.,ltd., Trade name KRC Kneader type S-1) at a temperature 270°C.

A test piece was made using a injection molding machine (Manufactured by Tabata Machine Co., Ltd., Trade name TS-35-FV25) at a temperature 275°C and was subjected to various tests as shown in table 6 such as, tensile strength test, flexural modulus test, heat deflection test, and kinetic friction measurement test (against steel: test condition:5kg/cm$^2$, linear velocity:30cm/sec.)

Results of the tests are also shown in table 8.

[Comparative example 17~32]

A test piece was also made according to the method described above except that an amount of multi phase structure thermoplastic resin is different from that of examples 21~46 or a polyethylene resin was employed in place of said multi phase structure thermoplastic resin as shown in table 8 and tested.

Test results are shown in table 8.

[Example 47~88]

An acrylonitrile-butadiene-styrene copolymer (as a styrene resin) (Manufactured by Ube Cycon Co., Ltd., Trade name Cycorac EX121), a high impact resistance polystyrene resin (Manufactured by Asahi Kasei Co., Ltd., Trade name HI styron 404), a general purpose styrene resin(Manufactured by Asahi Kasei Co., Ltd., Trade name GP Styron 666), a sliding property improving agent (multi phase structure thermoplastic resin) prepared in reference examples and a glass fiber (as an inorganic filler) having mean fiber length of 3.0mm and diameter of 13µm, were blended as shown in table 10 using a twin-screw extruder (Manufactured by Kurimoto Iron Works Co., ltd., Trade name KRC Kneader type S-1) at a temperature 230°C. A test piece was made using a injection molding machine (Manufactured by Tabata Machine Co., Ltd., Trade name TS-35-FV25) at a temperature of 230°C and was subjected to various tests

as shown in table 10 such as, tensile strength test, flexural modulus test, heat deflection test, and kinetic friction measurement test (against steel: test condition:5kg/$cm^2$, linear velocity:30cm/sec.)

Results of the tests are also shown in table 10.

[Comparative example 33~49]

A test piece was also made according to the method described above except that an amount of multi phase structure thermoplastic resin is different from that of examples 47~98 or a polyethylene resin was employed in place of said multi phase structure thermoplastic resin as shown in table 11 and tested.

Test results are shown in table 11.

[Examples 99~126]

A polybutyleneterephthalate resin as a thermoplastic polyester resin(Manufactured by Polyplastics Co.,Ltd., Trade name Duranex 2002), a polyethylene terephthalate resin(ultimate viscosity is 0.74), a glass fiber (as an inorganic filler) having mean fiber length of 3.0mm and diameter of 13μm, and a sliding property improving agent(multi phase structure thermoplastic resin) prepared in reference examples were blended as shown in table 12 using a twin-screw extruder (Manufactured by Kurimoto Iron Works Co., ltd, Trade name KRC Kneader type S-1) at a temperature 230°C. A test piece was made using a injection molding machine (Manufactured by Tabata Machine Co., Ltd., Trade name TS-35-FV25) at a temperature 230°C (280°C, when polyethylene terephthalate resins are employed) and was subjected to various tests as shown in table 12 such as, tensile strength test, flexural modulus test, heat deflection test, and kinetic friction measurement test (against steel: test condition:5kg/$cm^2$, linear velocity:30cm/sec.)

Results of the tests are also shown in table 12.

[Comparative example 50~65]

A test piece was also made according to the method described above except that an amount of multi phase structure thermoplastic resin is different from that of examples 99~126 or a polyethylene resin was employed in place of said multi phase structure thermoplastic resin as shown in table 13 and tested.

Test results are shown in table 13.

[Example 127~155]

A polyphenylene sulfide resin as a polyarlylenesulfide resin (melting viscosity is 2,900 poise: 300°C, load 10kg), a glass fiber(as an inorganic filler) having a mean fiber length of 3.0mm and a diameter of 13μm, and a sliding property improving agent(multi phase structure thermoplastic resin) prepared in reference examples were blended as shown in table 14 using a twin-screw extruder (Manufactured by Kurimoto Iron Works Co.,ltd., Trade name KRC Kneader type S-1) at temperature 290°C.

A test piece was made using a injection molding machine [Manufactured by Tabata machine Co.,Ltd., Trade name TS-35-FV25) at a temperature of 320°C and was subjected to various tests as shown in table 14 such as, tensile strength test, flexural modulus test, heat deflection test, and kinetic friction measurement test(against steel: test condition:5kg/$cm^2$, linear velocity:80cm/sec.)

Results of the tests are also shown in table 14.

[Comparative example 66~81]

A test piece was also made according to the method described above except that an amount of said multi phase structure thermoplastic resin is different from that of examples 127~155 or a polyethylene resin was employed in place of said multi phase structure thermoplastic resin as shown table 15 and tested.

Test results are shown in table 15.

[Example 156~191]

A nylon 6 resin(manufactured by Ube Industries, Ltd., Trade name UBE NYLON 1013B), nylon 66 resin (manufactured by UBE Industries, Ltd., Trade name UBE NYLON 2020B), a nylon MXD 6 resin (Manufactured by Mitsubishi Gas Chemical Co.,Inc., Trade name Reny 602), as a polyamide resin, a glass fiber (as an inorganic filler) having a mean fiber length of 3.0mm and a diameter of 13μm, and a sliding property improving agent(multi phase structure thermoplastic resin) prepared in reference examples were blended as shown in table 16 using a twin-screw extruder

(Manufactured by Kurimoto Iron Works Co., ltd., Trade name KRC Kneader type S-1) at temperature 240°C (275°C for nylon 66, and 260°C for nylon MXD resin).

A test piece was made using a injection molding machine (Manufactured by Tabata Machine Co., Ltd., Trade name TS-35-FV25) at temperature 240°C (275°C for nylon 66, and 260°C for nylon MXD resin), and was subjected to various tests as shown in table 16 such as, tensile strength test, flexural modulus test, heat deflection test, and kinetic friction measurement test (against steel: test condition:5kg/cm$^2$, linear velocity:30cm/sec.)

Results of the tests are also shown in table 16.

[Comparative example 82~97]

A test piece was also made according to the method described above except that an amount of said multi phase structure thermoplastic resin is different from that of examples 156~192 or a polyethylene resin was employed in place of said multi phase structure thermoplastic resin as shown table 17 and tested.

Test results are shown in table 17.

[Examples 192~227]

A modified polyphenylene ether resin (Manufactured by EPL Co.,Ltd., Trade name Noril 731J) as a mixture of polyphenylene ether resin and styrene resin, or a polyphenylene ether resin (melting viscosity is 30, 000 poise at 300°C, shear velocity: 100s$^{-1}$) as a sole polyphenylene ether resin, a glass fiber(as an inorganic filler) having a mean fiber length of 3.0mm and a diameter of 13μm, and a sliding property improving agent (multi phase structure thermoplastic resin) prepared in reference examples were blended as shown in table 18 using a twin-screw extruder (Manufactured by Kurimoto Iron Works Co.,ltd., Trade name KRC Kneader type S-1) at temperature 270°C.

A test piece was made using in line screw type injection molding machine (Manufactured by Tabata Machine Co., Ltd., Trade name TS-35-FV25) at a temperature of 290°C and was subjected to various tests as shown in table 18 such as, tensile strength test, flexural modulus test, heat deflection test, and kinetic friction measurement test (against steel: test condition:5kg/cm$^2$, linear velocity:80cm/sec.)

Results of the tests are also shown in table 18.

[Comparative example 98~113]

A test piece was also made according to the method described above except that an amount of said multi phase structure thermoplastic resin is different from that of examples 192 or a polyethylene resin was employed in place of said multi phase structure thermoplastic resin as shown in table 19 and tested.

Test results are shown in table 19.

[Example 228~255]

A polyarylate resin, (Manufactured by Unitika, Ltd.,Trade name U polymer U 100), a glass fiber(as an inorganic filler) having a mean fiber length of 3.0mm and a diameter of 13μm, and a sliding property improving agent (multi phase structure thermoplastic resin) prepared in reference examples were blended as shown in table 20 using a twin-screw extruder (Manufactured by Kurimoto Iron Works Co., ltd.; Trade name KRC Kneader type S-1) at temperature 320°C.

A test piece was made using a injection molding machine (Manufactured by Tabata Machine Co., Ltd., Trade name TS-35-FV25) at a temperature of 340°C, and was subjected to various tests as shown in table 20 such as, tensile strength test, flexural modulus test, heat deflection test, and kinetic friction measurement test (against steel: test condition:5kg/cm$^2$, linear velocity:80cm/sec.)

Results of the tests are also shown in table 20.

[Comparative example 114~129]

A test piece was also made according to the method described above except that an amount of said multi phase structure thermoplastic resin is different from that of examples 228 or a polyethylene resin was employed in place of said multi phase structure thermoplastic resin as shown table 21 and tested.

Test results are shown in table 21.

It may now be clearly understood that according to the invention disclosed above, the multi phase structure thermoplastic resin is a perfect sliding property improving agent.

It is also found that a combination use of said multi phase structure thermoplastic as a sliding property improving agent and lubricating material exhibits a far more improved effect.

It is also clear that the multi phase structure thermoplastic resin of this invention disperses into thermoplastics merely by blending under melting state and the surface appearance of the resulting products containing multi phase structure thermoplastic resin has no defects and no delamination was observed.

A multi phase structure thermoplastic resin according to this invention as a sliding property improving agent effectively improves the property of the resins without adversely affecting the mechanical property and physical property of thermoplastic resins and sliding property is improved only by blending under melting state. Further a degree of effectiveness of this agent is easily controlled by the amount of the agent added to the system, therefore, the agent of this invention is preferably applicable to a multi-kind small lot production system.

Consequently, the sliding property improving agent according to this invention may widely be used in the field of electric and electro-mechanical industries, precision machines industries and automobile industries.

In tables 6 to 21 the units of tensile strength and flexural modulus are to be converted into SI - units as follows:

$$1\ kgf/mm^2 = 9.807\ N/mm^2$$

Table 1

| Reference Example No. | 1 | 2 | 3 | 4 | 5 | 6 | 7 | 8 | 9 |
|---|---|---|---|---|---|---|---|---|---|
| Symbol of multi phase structure thermoplastic resin | A | B | C | D | E | F | G | H | I |
| Non-Polar α-olefin polymer: | | | | | | | | | |
| Low density polyethylene | 700g | 700g | 700g | — | — | — | — | — | — |
| High density polyethylene | — | — | — | 700g | 700g | — | — | — | — |
| Ultra high-molecular weight polyethylene | — | — | — | — | — | 700g | 700g | — | — |
| Linear low density polyethylene | — | — | — | — | — | — | — | 700g | 700g |
| Vinyl monomer: | | | | | | | | | |
| Styrene monomer | 210g | — | 300g | 210g | 300g | 210g | 300g | 210g | 300g |
| Acrylo nitrile monomer | 90g | — | — | 90g | — | 90g | — | 90g | — |
| Methyl methacrylate monomer | — | 300g | — | — | — | — | — | — | — |
| Molecule weight adjusting agent: | | | | | | | | | |
| n-dodecyl mercaptan | — | 0.6g | — | — | — | — | — | — | — |
| Mean grade of polymerization of vinyl polymer | 900 | 700 | 850 | 850 | 830 | 870 | 825 | 920 | 850 |
| Diameter of dispersed resin in the multi phase resin | 0.3~ 0.4 | 0.1~ 0.2 | 0.2~ 0.3 | 0.3~ 0.4 | 0.3~ 0.4 | 0.3~ 0.4 | 0.4~ 0.5 | 0.2~ 0.3 | 0.2 0.3 |

Low density polyethylene: Nippon Petrochemicals Co., Ltd. "Rexlon F41" density=0.924g/cm³,
High density polyethylene: Nippon Petrochemicals Co., Ltd., "Staflen E780" density=0.963g/cm³,
Ultra High molecular weight polyethylene: Mitsui Petrochemical Industries, Ltd.,"Lubmer L400" density=0.966g/cm³,
Linear low density polyethylene: Nippon Petrochemicals Co., Ltd.,"Linelex AJ5310" density=0.923g/cm³,

Table 2

| Reference Example No. | 13 | 14 | 15 | 16 | 17 | 18 |
|---|---|---|---|---|---|---|
| Symbol of Multi phase structure thermoplastic Resin | J | K | L | M | N | O |
| Multi phase structure thermoplastic: (% by weight) | | | | | | |
| Multi phase structure thermoplastic resin (A') | 67 | — | — | 71 | — | — |
| Multi phase structure thermoplastic resin (B') | — | 67 | — | — | 71 | — |
| Multi phase structure thermoplastic resin (C') | — | — | 67 | — | — | 71 |
| Non-polar α-olefin polymer: | | | | | | |
| Low density polyethylene (% by weight) | 33 | 33 | 33 | — | — | — |
| Vinyl Polymer: | | | | | | |
| Vinyl polymer i (% by weight) | — | — | — | 29 | — | — |
| Vinyl polymer ii (% by weight) | — | — | — | — | 29 | — |
| Vinyl polymer iii (% by weight) | — | — | — | — | — | 29 |
| Diameter of dispersed resin in the multi phase resin (μm) | 0.3~0.4 | 0.2~0.3 | 0.4~0.5 | 0.4~0.5 | 0.3~0.4 | 0.4~0.5 |

Low density polyethylene : Nippon Petrochemicals Co., Ltd. "Rexlon F41", density=0.924g/cm³,
A prime attatched to the symbol of the multi phase structure thermoplastic resin indicates that the resin was not blended by extrusion.

Table 3

| Reference Example No. | 19 | | 20 | | 21 | |
|---|---|---|---|---|---|---|
| Symbol of multi phase structure thermoplastic resin | P | Q | R | S | T | U |
| Non-polar α-olefin polymer: | | | | | | |
| Low density polyethylene | 700g | | 700g | | 700g | |
| Vinyl monomer: | | | | | | |
| Styrene monomer | 210g | | – | | 300g | |
| Acrylo nitrile monomer | 90g | | – | | – | |
| Methyl methacrylate monomer | – | | 300g | | – | |
| Molecular weight adjusting agent | | | | | | |
| n-dodecyl mercaptan | – | | 0.6g | | – | |
| Blending by melting extrusion | No | Yes | No | Yes | No | Yes |
| Mean number degree of polymerization of the vinyl polymer | 860 | | 710 | | 830 | |
| Diameter of dispersed resin in the multi phase resin | 0.3~0.4 | 0.4~0.5 | 0.3~0.4 | 0.4~0.5 | 0.3~0.4 | 0.4~0.5 |

Low density polyethylene : Nippon Petrochemicals Co., Ltd. "Rexlon F41" density=0.924g/cm³,

Table 4

| Reference Example No. | 22 | 23 | 24 | 25 | 26 | 27 |
|---|---|---|---|---|---|---|
| Symbol of Multi phase structure thermoplastic Resin | V | W | X | Y | Z | a |
| Multi phase structure thermoplastic: (% by weight) | | | | | | |
| Multi phase structure thermoplastic resin (P) | 67 | — | — | 71 | — | — |
| Multi phase structure thermoplastic resin (R) | — | 67 | — | — | 71 | — |
| Multi phase structure thermoplastic resin (T) | — | — | 67 | — | — | 71 |
| Non-polar α-olefin polymer: | | | | | | |
| Low density polyethylene (% by weight) | 33 | 33 | 33 | — | — | — |
| Vinyl Polymer: | | | | | | |
| Vinyl polymer i (% by weight) | — | — | — | 29 | — | — |
| Vinyl polymer ii (% by weight) | — | — | — | — | 29 | — |
| Vinyl polymer iii (% by weight) | — | — | — | — | — | 29 |
| Diameter of dispersed resin in the multi phase resin (μm) | 0.5~0.6 | 0.4~0.5 | 0.4~0.5 | 0.5~0.6 | 0.4~0.5 | 0.4~0.5 |

Low density polyethylene: Nippon Petrochemicals Co., Ltd. "Rexlon F41", density=0.924g/cm³,

Table 5

| Reference Example No. | 28 | 29 | 30 | 31 | 32 | 33 | 34 | 35 |
|---|---|---|---|---|---|---|---|---|
| Symbol of Multi phase structure thermoplastic Resin | b | c | d | e | f | g | h | i |
| Multi phase structure thermoplastic: (% by weight) | | | | | | | | |
| Multi phase structure thermoplastic resin (A) | 99.9 | 50 | 80 | 80 | 80 | — | — | — |
| Multi phase structure thermoplastic resin (P) | — | — | — | — | — | 80 | — | — |
| Multi phase structure thermoplastic resin (R) | — | — | — | — | — | — | 80 | — |
| Multi phase structure thermoplastic resin (T) | — | — | — | — | — | — | — | 80 |
| Lubricating material: | | | | | | | | |
| Stearyl stearate (% by weight) | 0.1 | 50 | 20 | — | — | 20 | 20 | 20 |
| Mineral oil | — | — | — | 20 | — | — | — | — |
| Dimethyl polysiloxane (% by weight) | — | — | — | — | 20 | — | — | — |

Table 6

| Example No. | 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|---|---|---|---|---|---|---|---|---|---|---|---|
| Polyoxymethylene(% by weight) | 95 | 80 | 50 | 80 | 80 | 80 | 80 | 80 | 80 | 80 | 80 | 80 | 80 | 80 | 80 | 80 | 80 | 80 | 80 | 80 |
| Multi phase structure thermoplastic resin B (% by weight) | 5 | 20 | 50 | – | – | – | – | – | – | – | – | – | – | – | – | – | – | – | – | – |
| Multi phase structure thermoplastic resin A (% by weight) | – | – | – | 20 | – | – | – | – | – | – | – | – | – | – | – | – | – | – | – | – |
| Multi phase structure thermoplastic resin D (% by weight) | – | – | – | – | 20 | – | – | – | – | – | – | – | – | – | – | – | – | – | – | – |
| Multi phase structure thermoplastic resin F (% by weight) | – | – | – | – | – | 20 | – | – | – | – | – | – | – | – | – | – | – | – | – | – |
| Multi phase structure thermoplastic resin H (% by weight) | – | – | – | – | – | – | 20 | – | – | – | – | – | – | – | – | – | – | – | – | – |
| Multi phase structure thermoplastic resin B'(% by weight) | – | – | – | – | – | – | – | 20 | – | – | – | – | – | – | – | – | – | – | – | – |
| Multi phase structure thermoplastic resin K (% by weight) | – | – | – | – | – | – | – | – | 20 | – | – | – | – | – | – | – | – | – | – | – |
| Multi phase structure thermoplastic resin N (% by weight) | – | – | – | – | – | – | – | – | – | 20 | – | – | – | – | – | – | – | – | – | – |
| Multi phase structure thermoplastic resin R (% by weight) | – | – | – | – | – | – | – | – | – | – | 20 | – | – | – | – | – | – | – | – | – |
| Multi phase structure thermoplastic resin S (% by weight) | – | – | – | – | – | – | – | – | – | – | – | 20 | – | – | – | – | – | – | – | – |
| Multi phase structure thermoplastic resin W (% by weight) | – | – | – | – | – | – | – | – | – | – | – | – | 20 | – | – | – | – | – | – | – |
| Multi phase structure thermoplastic resin Z (% by weight) | – | – | – | – | – | – | – | – | – | – | – | – | – | 20 | – | – | – | – | – | – |
| Multi phase structure thermoplastic resin b (% by weight) | – | – | – | – | – | – | – | – | – | – | – | – | – | – | 20 | – | – | – | – | – |
| Multi phase structure thermoplastic resin c (% by weight) | – | – | – | – | – | – | – | – | – | – | – | – | – | – | – | 20 | – | – | – | – |
| Multi phase structure thermoplastic resin d (% by weight) | – | – | – | – | – | – | – | – | – | – | – | – | – | – | – | – | 20 | – | – | – |
| Multi phase structure thermoplastic resin e (% by weight) | – | – | – | – | – | – | – | – | – | – | – | – | – | – | – | – | – | 20 | – | – |
| Multi phase structure thermoplastic resin f (% by weight) | – | – | – | – | – | – | – | – | – | – | – | – | – | – | – | – | – | – | 20 | – |
| Multi phase structure thermoplastic resin h (% by weight) | – | – | – | – | – | – | – | – | – | – | – | – | – | – | – | – | – | – | – | 20 |
| Dynamic friction coefficient | 0.16 | 0.19 | 0.18 | 0.19 | 0.17 | 0.16 | 0.18 | 0.21 | 0.20 | 0.20 | 0.22 | 0.23 | 0.23 | 0.24 | 0.18 | 0.15 | 0.16 | 0.16 | 0.16 | 0.20 |
| Tensile Strength(kgf/mm2) | 5.5 | 4.2 | 3.3 | 4.3 | 4.5 | 5.0 | 4.6 | 4.0 | 3.8 | 3.7 | 3.9 | 3.8 | 3.7 | 3.5 | 4.3 | 4.0 | 4.1 | 4.1 | 4.1 | 3.7 |
| Flexual modulus (kgf/mm2) | 211 | 192 | 174 | 190 | 215 | 220 | 188 | 185 | 182 | 179 | 180 | 179 | 179 | 172 | 190 | 185 | 188 | 187 | 188 | 177 |
| Heat deflection temperature | 101 | 95 | 75 | 97 | 97 | 99 | 96 | 92 | 90 | 87 | 90 | 90 | 87 | 85 | 97 | 90 | 95 | 94 | 95 | 87 |
| Appearance of injection mold | good | good | good | good | good | good | good | good | good | good | good | good | good | good | good | good | good | good | good | good |

Table 7

| Comparative Example No. | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| Polyoxymethylene(% by weight) | 100 | 99.9 | 40 | 40 | 40 | 40 | 40 | 40 | 40 | 40 | 95 | 80 | 50 | 80 | 80 | 80 |
| Multi phase structure thermoplastic resin B (% by weight) | – | 0.1 | 60 | – | – | – | – | – | – | – | – | – | – | – | – | – |
| Multi phase structure thermoplastic resin A (% by weight) | – | – | – | 60 | – | – | – | – | – | – | – | – | – | – | – | – |
| Multi phase structure thermoplastic resin D (% by weight) | – | – | – | – | 60 | – | – | – | – | – | – | – | – | – | – | – |
| Multi phase structure thermoplastic resin F (% by weight) | – | – | – | – | – | 60 | – | – | – | – | – | – | – | – | – | – |
| Multi phase structure thermoplastic resin H (% by weight) | – | – | – | – | – | – | 60 | – | – | – | – | – | – | – | – | – |
| Multi phase structure thermoplastic resin S (% by weight) | – | – | – | – | – | – | – | 60 | – | – | – | – | – | – | – | – |
| Multi phase structure thermoplastic resin d (% by weight) | – | – | – | – | – | – | – | – | 60 | – | – | – | – | – | – | – |
| Multi phase structure thermoplastic resin h (% by weight) | – | – | – | – | – | – | – | – | – | 60 | – | – | – | – | – | – |
| Low density polyethylene "RexlonF41" (% by weight) | – | – | – | – | – | – | – | – | – | – | 5 | 20 | 50 | – | – | – |
| High density polyethylene "StaflenE780" (% by weight) | – | – | – | – | – | – | – | – | – | – | – | – | – | 20 | – | – |
| Ultra high molecular weight polyethylene"LubmerL4000" (% by weight) | – | – | – | – | – | – | – | – | – | – | – | – | – | – | 20 | – |
| Linear low density polyethylene"LinilexAJ5310"(% by weight) | – | – | – | – | – | – | – | – | – | – | – | – | – | – | – | 20 |
| Dynamic friction coefficient | 0.38 | 0.39 | 0.18 | 0.18 | 0.16 | 0.15 | 0.17 | 0.20 | 0.17 | 0.18 | 0.25 | 0.25 | (*1) | (1*) | (*1) | 0.23 |
| Tensile Strength(kgf/mm2) | 5.8 | 5.8 | 2.7 | 2.8 | 2.9 | 2.9 | 2.8 | 2.5 | 2.4 | 2.3 | 4.8 | 3.5 | – | – | – | 3.6 |
| Flexual modulus (kgf/mm2) | 218 | 217 | 152 | 157 | 160 | 163 | 155 | 145 | 150 | 142 | 195 | 150 | – | – | – | 155 |
| Heat deflection temperature | 107 | 107 | 57 | 60 | 63 | 65 | 60 | 52 | 55 | 50 | 90 | 81 | – | – | – | 82 |
| Appearance of injection mold | good | good | *A | *A | *A | *A | *A | *A | *A | *A | *B | *C | – | – | – | *C |

(*1) No sample was prepared because it was impossible to make a strand by extrusion.
*A: Slight layer separation was observed. *B: Layer separation was observed.
*C: Strong layer separation was observed.

Table 8

(unit is expressed by part by weight)

| Example No. | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 |
|---|---|---|---|---|---|---|---|---|---|---|---|---|---|---|---|---|---|---|---|---|---|---|---|---|---|---|
| Polycarbonate resin | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 |
| Multi phase structure thermoplastic resin A | 10 | 5 | 100 | – | – | – | – | – | – | – | – | – | – | – | – | – | – | – | – | – | 10 | – | – | – | – | – |
| Multi phase structure thermoplastic resin B | – | – | – | 10 | – | – | – | – | – | – | – | – | – | – | – | – | – | – | – | – | – | 10 | – | – | – | – |
| Multi phase structure thermoplastic resin D | – | – | – | – | 10 | – | – | – | – | – | – | – | – | – | – | – | – | – | – | – | – | – | 10 | – | – | – |
| Multi phase structure thermoplastic resin F | – | – | – | – | – | 10 | – | – | – | – | – | – | – | – | – | – | – | – | – | – | – | – | – | 10 | – | – |
| Multi phase structure thermoplastic resin H | – | – | – | – | – | – | 10 | – | – | – | – | – | – | – | – | – | – | – | – | – | – | – | – | – | 10 | – |
| Multi phase structure thermoplastic resin A' | – | – | – | – | – | – | – | 10 | – | – | – | – | – | – | – | – | – | – | – | – | – | – | – | – | – | – |
| Multi phase structure thermoplastic resin J | – | – | – | – | – | – | – | – | 10 | – | – | – | – | – | – | – | – | – | – | – | – | – | – | – | – | – |
| Multi phase structure thermoplastic resin M | – | – | – | – | – | – | – | – | – | 10 | – | – | – | – | – | – | – | – | – | – | – | – | – | – | – | – |
| Multi phase structure thermoplastic resin P | – | – | – | – | – | – | – | – | – | – | 10 | – | – | – | – | – | – | – | – | – | – | – | – | – | – | – |
| Multi phase structure thermoplastic resin Q | – | – | – | – | – | – | – | – | – | – | – | 10 | – | – | – | – | – | – | – | – | – | – | – | – | – | 10 |
| Multi phase structure thermoplastic resin V | – | – | – | – | – | – | – | – | – | – | – | – | 10 | – | – | – | – | – | – | – | – | – | – | – | – | – |
| Multi phase structure thermoplastic resin Y | – | – | – | – | – | – | – | – | – | – | – | – | – | 10 | – | – | – | – | – | – | – | – | – | – | – | – |
| Multi phase structure thermoplastic resin b | – | – | – | – | – | – | – | – | – | – | – | – | – | – | 10 | – | – | – | – | – | – | – | – | – | – | – |
| Multi phase structure thermoplastic resin c | – | – | – | – | – | – | – | – | – | – | – | – | – | – | – | 10 | – | – | – | – | – | – | – | – | – | – |
| Multi phase structure thermoplastic resin d | – | – | – | – | – | – | – | – | – | – | – | – | – | – | – | – | 10 | – | – | – | – | – | – | – | – | – |
| Multi phase structure thermoplastic resin e | – | – | – | – | – | – | – | – | – | – | – | – | – | – | – | – | – | 10 | – | – | – | – | – | – | – | – |
| Multi phase structure thermoplastic resin f | – | – | – | – | – | – | – | – | – | – | – | – | – | – | – | – | – | – | 10 | – | – | – | – | – | – | – |
| Multi phase structure thermoplastic resin g | – | – | – | – | – | – | – | – | – | – | – | – | – | – | – | – | – | – | – | 10 | – | – | – | – | – | – |
| Glass fiber | – | – | – | – | – | – | – | – | – | – | – | – | – | – | – | – | – | – | – | – | 50 | 50 | 50 | 50 | 50 | 50 |
| Dynamic friction coefficient | 0.21 | 0.30 | 0.23 | 0.24 | 0.20 | 0.19 | 0.20 | 0.22 | 0.23 | 0.24 | 0.24 | 0.26 | 0.26 | 0.26 | 0.20 | 0.17 | 0.19 | 0.19 | 0.19 | 0.22 | 0.25 | 0.24 | 0.25 | 0.26 | 0.25 | 0.29 |
| Tensile Strength (kgf/mm2) | 7.3 | 7.6 | 6.6 | 7.1 | 7.5 | 7.7 | 7.4 | 7.1 | 7.0 | 7.1 | 7.1 | 6.9 | 6.7 | 6.8 | 7.3 | 7.1 | 7.2 | 7.2 | 7.2 | 6.9 | 12.4 | 12.1 | 12.5 | 12.5 | 12.2 | 11.8 |
| Flexual modulus (kgf/mm2) | 202 | 206 | 188 | 201 | 205 | 211 | 203 | 198 | 195 | 198 | 198 | 196 | 190 | 193 | 201 | 195 | 199 | 197 | 198 | 194 | 781 | 778 | 780 | 780 | 770 | 765 |
| Heat deflection temperature | 122 | 127 | 112 | 119 | 124 | 125 | 121 | 120 | 118 | 119 | 118 | 116 | 115 | 117 | 122 | 116 | 120 | 119 | 120 | 114 | 137 | 133 | 140 | 139 | 136 | 133 |
| Appearance of injection mold | good | good | good | good | good | good | good | good | good | good | good | good | good | good | good | good | good | good | good | good | good | good | good | good | good | good |

Table 9

(Unit is expressed by part by weight)

| Comparative Example No. | 17 | 18 | 19 | 20 | 21 | 22 | 23 | 24 | 25 | 26 | 27 | 28 | 29 | 30 | 31 | 32 |
|---|---|---|---|---|---|---|---|---|---|---|---|---|---|---|---|---|
| Polyoxymethylene | 100 | 100 | 100 | 100 | 100 | 100 | 100 | 100 | 100 | 100 | 100 | 100 | 100 | 100 | 100 | 100 |
| Multi phase structure thermoplastic resin A | — | 0.1 | 150 | — | — | — | — | — | — | — | — | — | — | — | — | — |
| Multi phase structure thermoplastic resin B | — | — | — | 150 | — | — | — | — | — | — | — | — | — | — | — | — |
| Multi phase structure thermoplastic resin D | — | — | — | — | 150 | — | — | — | — | — | — | — | — | — | — | — |
| Multi phase structure thermoplastic resin F | — | — | — | — | — | 150 | — | — | — | — | — | — | — | — | — | — |
| Multi phase structure thermoplastic resin H | — | — | — | — | — | — | 150 | — | — | — | — | — | — | — | — | — |
| Multi phase structure thermoplastic resin Q | — | — | — | — | — | — | — | 150 | — | — | — | — | — | — | — | — |
| Multi phase structure thermoplastic resin d | — | — | — | — | — | — | — | — | 150 | — | — | — | — | — | — | — |
| Multi phase structure thermoplastic resin g | — | — | — | — | — | — | — | — | — | 150 | — | — | — | — | — | — |
| Low density polyethylene "RexlonF41" | — | — | — | — | — | — | — | — | — | — | 10 | 5 | 100 | — | — | — |
| High density polyethylene "StaflenE780" | — | — | — | — | — | — | — | — | — | — | — | — | — | 10 | — | — |
| Ultra high molecular weight polyethy-lene"LubmerL4000" | — | — | — | — | — | — | — | — | — | — | — | — | — | — | 10 | — |
| Linear low density polyethylene"LinilexAJ5310" | — | — | — | — | — | — | — | — | — | — | — | — | — | — | — | 10 |
| | | | | | | | | | | | | | | | | |
| Dynamic friction coefficient | 0.62 | 0.61 | 0.25 | 0.26 | 0.27 | 0.26 | 0.25 | 0.28 | 0.23 | 0.26 | 0.30 | 0.33 | (*1) | (1*) | (*1) | 0.31 |
| Tensile Strength(kgf/mm2) | 8.0 | 8.0 | 5.8 | 5.7 | 5.6 | 6.0 | 6.2 | 5.5 | 5.5 | 5.1 | 6.5 | 7.1 | — | — | — | 6.6 |
| Flexual modulus (kgf/mm2) | 215 | 217 | 166 | 162 | 163 | 170 | 173 | 154 | 160 | 150 | 161 | 170 | — | — | — | 165 |
| (℃) Heat deflection temperature | 132 | 133 | 101 | 99 | 100 | 101 | 103 | 97 | 96 | 92 | 113 | 122 | — | — | — | 110 |
| Appearance of injection mold | good | good | *A | *A | *A | *A | *A | *A | *A | *A | *B | *C | — | — | — | *C |

(*1) No sample was prepared because it was impossible to make a strand by extrusion.
*A: Slight layer separation was observed. *B: Layer separation was observed.
*C: Strong layer separation was observed.

(Unit is expressed by part by weight)

Table 10-1

| Example No. | 47 | 48 | 49 | 50 | 51 | 52 | 53 | 54 | 55 | 56 | 57 | 58 | 59 | 60 | 60 | 62 | 63 | 64 | 65 | 66 | 67 | 68 | 69 | 70 | 71 | 72 |
|---|---|---|---|---|---|---|---|---|---|---|---|---|---|---|---|---|---|---|---|---|---|---|---|---|---|---|
| A-B-S copolymer resin | 100 | 100 | 100 | 100 | 100 | 100 | 100 | 100 | 100 | 100 | 100 | 100 | 100 | 100 | 100 | 100 | 100 | 100 | 100 | 100 | 100 | – | – | – | – | – |
| High impact polyethylene | – | – | – | – | – | – | – | – | – | – | – | – | – | – | – | – | – | – | – | – | – | 100 | 100 | 100 | 100 | 100 |
| General-purpose polystyrene | – | – | – | – | – | – | – | – | – | – | – | – | – | – | – | – | – | – | – | – | – | – | – | – | – | – |
| Multi phase structure resin A | 10 | 5 | 100 | – | – | – | – | – | – | – | – | – | – | – | – | – | – | – | – | – | – | 10 | – | – | – | – |
| Multi phase structure resin C | – | – | – | 10 | – | – | – | – | – | – | – | – | – | – | – | – | – | – | – | – | – | – | 10 | – | – | – |
| Multi phase structure resin B | – | – | – | – | 10 | – | – | – | – | – | – | – | – | – | – | – | – | – | – | – | – | – | – | 10 | – | – |
| Multi phase structure resin D | – | – | – | – | – | 10 | – | – | – | – | – | – | – | – | – | – | – | – | – | – | – | – | – | – | 10 | – |
| Multi phase structure resin F | – | – | – | – | – | – | 10 | – | – | – | – | – | – | – | – | – | – | – | – | – | – | – | – | – | – | 10 |
| Multi phase structure resin H | – | – | – | – | – | – | – | 10 | – | – | – | – | – | – | – | – | – | – | – | – | – | – | – | – | – | – |
| Multi phase structure resin A' | – | – | – | – | – | – | – | – | 10 | – | – | – | – | – | – | – | – | – | – | – | – | – | – | – | – | – |
| Multi phase structure resin J | – | – | – | – | – | – | – | – | – | 10 | – | – | – | – | – | – | – | – | – | – | – | – | – | – | – | – |
| Multi phase structure resin M | – | – | – | – | – | – | – | – | – | – | 10 | – | – | – | – | – | – | – | – | – | – | – | – | – | – | – |
| Multi phase structure resin P | – | – | – | – | – | – | – | – | – | – | – | 10 | – | – | – | – | – | – | – | – | – | – | – | – | – | – |
| Multi phase structure resin Q | – | – | – | – | – | – | – | – | – | – | – | – | 10 | – | – | – | – | – | – | – | – | – | – | – | – | – |
| Multi phase structure resin V | – | – | – | – | – | – | – | – | – | – | – | – | – | 10 | – | – | – | – | – | – | – | – | – | – | – | – |
| Multi phase structure resin Y | – | – | – | – | – | – | – | – | – | – | – | – | – | – | 10 | – | – | – | – | – | – | – | – | – | – | – |
| Multi phase structure resin b | – | – | – | – | – | – | – | – | – | – | – | – | – | – | – | 10 | – | – | – | – | – | – | – | – | – | – |
| Multi phase structure resin c | – | – | – | – | – | – | – | – | – | – | – | – | – | – | – | – | 10 | – | – | – | – | – | – | – | – | – |
| Multi phase structure resin d | – | – | – | – | – | – | – | – | – | – | – | – | – | – | – | – | – | 10 | – | – | – | – | – | – | – | – |
| Multi phase structure resin e | – | – | – | – | – | – | – | – | – | – | – | – | – | – | – | – | – | – | 10 | – | – | – | – | – | – | – |
| Multi phase structure resin f | – | – | – | – | – | – | – | – | – | – | – | – | – | – | – | – | – | – | – | 10 | – | – | – | – | – | – |
| Multi phase structure resin g | – | – | – | – | – | – | – | – | – | – | – | – | – | – | – | – | – | – | – | – | 10 | – | – | – | – | – |
| Glass fiber | – | – | – | – | – | – | – | – | – | – | – | – | – | – | – | – | – | – | – | – | – | – | – | – | – | – |
| Dynamic friction coefficient | 0.21 | 0.25 | 0.23 | 0.22 | 0.23 | 0.20 | 0.20 | 0.22 | 0.24 | 0.22 | 0.24 | 0.25 | 0.26 | 0.25 | 0.26 | 0.20 | 0.17 | 0.19 | 0.19 | 0.18 | 0.22 | 0.23 | 0.24 | 0.25 | 0.22 | 0.22 |
| Tensile Strength(kgf/mm2) | 4.0 | 4.1 | 3.5 | 3.9 | 3.8 | 4.1 | 4.2 | 3.9 | 3.9 | 3.8 | 4.1 | 3.8 | 3.7 | 3.6 | 3.9 | 4.0 | 3.7 | 3.9 | 3.8 | 3.9 | 3.5 | 3.5 | 3.6 | 3.4 | 3.6 | 3.7 |
| Flexual modulus (kgf/mm2) | 248 | 251 | 236 | 244 | 246 | 250 | 258 | 247 | 245 | 243 | 254 | 243 | 243 | 238 | 245 | 246 | 241 | 243 | 244 | 243 | 238 | 277 | 274 | 275 | 279 | 285 |
| Heat deflection temperature | 88 | 90 | 80 | 86 | 84 | 85 | 86 | 87 | 85 | 85 | 92 | 84 | 83 | 82 | 87 | 87 | 83 | 85 | 86 | 84 | 80 | 74 | 71 | 69 | 71 | 72 |
| Appearance of injection mold | good | good | good | good | good | good | good | good | good | good | good | good | good | good | good | good | good | good | good | good | good | good | good | good | good | good |

to be continued

(Unit is expressed by part by weight)

Table 10-2

| Example No. | 73 | 74 | 75 | 76 | 77 | 78 | 79 | 80 | 81 | 82 | 83 | 84 | 85 | 86 | 87 | 88 | 89 | 90 | 91 | 92 | 93 | 94 | 95 | 96 | 97 | 93 |
|---|---|---|---|---|---|---|---|---|---|---|---|---|---|---|---|---|---|---|---|---|---|---|---|---|---|---|
| A-B-S copolymer resin | — | — | — | — | — | — | — | — | — | — | — | — | — | — | — | — | — | 100 | 100 | 100 | 100 | 100 | 100 | 100 | 100 | 100 |
| High impact polyethylene | 100 | 100 | 100 | 100 | 100 | 100 | — | — | — | — | — | — | — | — | — | — | — | — | — | — | — | — | — | — | — | — |
| Universal polystyrene | — | — | — | — | — | — | 100 | 100 | 100 | 100 | 100 | 100 | 100 | 100 | 100 | 100 | 100 | — | — | — | — | — | — | — | — | — |
| Multi phase structure resin A | — | — | — | — | — | — | 10 | — | — | — | — | — | — | — | — | — | — | 10 | — | — | — | — | — | — | — | — |
| Multi phase structure resin C | — | — | — | — | — | — | — | 10 | — | — | — | — | — | — | — | — | — | — | 10 | — | — | — | — | — | — | — |
| Multi phase structure resin B | — | — | — | — | — | — | — | — | 10 | — | — | — | — | — | — | — | — | — | — | 10 | — | — | — | — | — | — |
| Multi phase structure resin D | — | — | — | — | — | — | — | — | — | 10 | — | — | — | — | — | — | — | — | — | — | 10 | — | — | — | — | — |
| Multi phase structure resin F | — | — | — | — | — | — | — | — | — | — | 10 | — | — | — | — | — | — | — | — | — | — | 10 | — | — | — | — |
| Multi phase structure resin H | 10 | — | — | — | — | — | — | — | — | — | — | 10 | — | — | — | — | — | — | — | — | — | — | 10 | — | — | — |
| Multi phase structure resin A' | — | — | — | — | — | — | — | — | — | — | — | — | — | — | — | — | — | — | — | — | — | — | — | — | — | — |
| Multi phase structure resin J | — | — | — | — | — | — | — | — | — | — | — | — | — | — | — | — | — | — | — | — | — | — | — | — | — | — |
| Multi phase structure resin M | — | — | — | — | — | — | — | — | — | — | — | — | — | — | — | — | — | — | — | — | — | — | — | — | — | — |
| Multi phase structure resin P | — | — | — | — | — | — | — | — | — | — | — | — | — | — | — | — | — | — | — | — | — | — | — | — | — | — |
| Multi phase structure resin Q | — | 10 | — | — | — | — | — | — | — | — | — | — | 10 | — | — | — | — | — | — | — | — | — | — | 10 | — | — |
| Multi phase structure resin V | — | — | — | — | — | — | — | — | — | — | — | — | — | — | — | — | — | — | — | — | — | — | — | — | — | — |
| Multi phase structure resin Y | — | — | — | — | — | — | — | — | — | — | — | — | — | — | — | — | — | — | — | — | — | — | — | — | — | — |
| Multi phase structure resin b | — | — | — | — | — | — | — | — | — | — | — | — | — | — | — | — | — | — | — | — | — | — | — | — | — | — |
| Multi phase structure resin c | — | — | — | — | — | — | — | — | — | — | — | — | — | — | — | — | — | — | — | — | — | — | — | — | — | — |
| Multi phase structure resin d | — | — | 10 | — | — | — | — | — | — | — | — | — | — | 10 | — | — | — | — | — | — | — | — | — | — | 10 | — |
| Multi phase structure resin e | — | — | — | 10 | — | — | — | — | — | — | — | — | — | — | 10 | — | — | — | — | — | — | — | — | — | — | — |
| Multi phase structure resin f | — | — | — | — | 10 | — | — | — | — | — | — | — | — | — | — | 10 | — | — | — | — | — | — | — | — | — | — |
| Multi phase structure resin g | — | — | — | — | — | 10 | — | — | — | — | — | — | — | — | — | — | 10 | — | — | — | — | — | — | — | — | 10 |
| Glass fiber | — | — | — | — | — | — | — | — | — | — | — | — | — | — | — | — | — | 25 | 25 | 25 | 25 | 25 | 25 | 25 | 25 | 25 |
| Dynamic friction coefficient | 0.24 | 0.28 | 0.20 | 0.21 | 0.20 | 0.25 | 0.24 | 0.24 | 0.26 | 0.23 | 0.24 | 0.23 | 0.29 | 0.22 | 0.22 | 0.21 | 0.26 | 0.28 | 0.29 | 0.29 | 0.26 | 0.27 | 0.29 | 0.31 | 0.25 | 0.27 |
| Tensile Strength(kgf/mm2) | 3.5 | 3.3 | 3.3 | 3.2 | 3.3 | 3.0 | 4.7 | 4.6 | 4.5 | 4.7 | 4.8 | 4.5 | 4.4 | 4.4 | 4.5 | 4.5 | 4.1 | 9.5 | 9.4 | 9.4 | 9.6 | 9.7 | 9.5 | 9.2 | 9.3 | 9.1 |
| Flexual modulus (kgf/mm2) | 278 | 268 | 270 | 271 | 272 | 265 | 385 | 384 | 387 | 390 | 394 | 388 | 378 | 382 | 341 | 382 | 370 | 571 | 560 | 566 | 578 | 593 | 553 | 568 | 565 | 562 |
| Heat deflection temperature | 74 | 67 | 71 | 72 | 71 | 65 | 78 | 76 | 73 | 76 | 77 | 79 | 71 | 75 | 74 | 75 | 67 | 97 | 96 | 95 | 97 | 98 | 97 | 94 | 96 | 92 |
| Appearance of injection mold | good | good | good | good | good | good | good | good | good | good | good | good | good | good | good | good | good | good | good | good | good | good | good | good | good | good |

Table 11

(Unit is expressed by part by weight)

| Comparative Example No. | 33 | 34 | 35 | 36 | 37 | 38 | 39 | 40 | 41 | 42 | 43 | 44 | 45 | 46 | 47 | 48 | 49 |
|---|---|---|---|---|---|---|---|---|---|---|---|---|---|---|---|---|---|
| A-B-S copolymer resin | 100 | 100 | 100 | 100 | 100 | 100 | 100 | 100 | 100 | 100 | 100 | 100 | 100 | 100 | 100 | 100 | 100 |
| Multi phase structure thermoplastic resin A | – | 0.1 | 150 | – | – | – | – | – | – | – | – | – | – | – | – | – | – |
| Multi phase structure thermoplastic resin C | – | – | – | 150 | – | – | – | – | – | – | – | – | – | – | – | – | – |
| Multi phase structure thermoplastic resin B | – | – | – | – | 150 | – | – | – | – | – | – | – | – | – | – | – | – |
| Multi phase structure thermoplastic resin D | – | – | – | – | – | 150 | – | – | – | – | – | – | – | – | – | – | – |
| Multi phase structure thermoplastic resin F | – | – | – | – | – | – | 150 | – | – | – | – | – | – | – | – | – | – |
| Multi phase structure thermoplastic resin H | – | – | – | – | – | – | – | 150 | – | – | – | – | – | – | – | – | – |
| Multi phase structure thermoplastic resin Q | – | – | – | – | – | – | – | – | 150 | – | – | – | – | – | – | – | – |
| Multi phase structure thermoplastic resin d | – | – | – | – | – | – | – | – | – | 150 | – | – | – | – | – | – | – |
| Multi phase structure thermoplastic resin g | – | – | – | – | – | – | – | – | – | – | 150 | – | – | – | – | – | – |
| Low density polyethylene "RexlonF41" | – | – | – | – | – | – | – | – | – | – | – | 10 | 5 | 100 | – | – | – |
| High density polyethylene "StaflenE780" | – | – | – | – | – | – | – | – | – | – | – | – | – | – | 10 | – | – |
| Ultra high molecular weight polyethylene "LubmerL4000" | – | – | – | – | – | – | – | – | – | – | – | – | – | – | – | 10 | – |
| Linear low density polyethylene "LinilexAJ5310" | – | – | – | – | – | – | – | – | – | – | – | – | – | – | – | – | 10 |
| Dynamic friction coefficient | 0.58 | 0.59 | 0.31 | 0.32 | 0.33 | 0.31 | 0.32 | 0.31 | 0.35 | 0.29 | 0.33 | 0.28 | 0.31 | (1*) | 0.27 | 0.28 | 0.29 |
| Tensile Strength (kgf/mm2) | 4.4 | 4.4 | 2.8 | 2.7 | 2.6 | 2.6 | 2.7 | 2.5 | 2.3 | 2.6 | 2.1 | 3.4 | 3.6 | – | 3.5 | 3.4 | 3.3 |
| Flexual modulus (kgf/mm2) | 268 | 267 | 212 | 207 | 205 | 214 | 214 | 203 | 198 | 205 | 194 | 194 | 213 | – | 206 | 208 | 192 |
| Heat deflection temperature (℃) | 07 | 107 | 72 | 69 | 67 | 68 | 69 | 67 | 65 | 69 | 60 | 79 | 82 | – | 80 | 80 | 80 |
| Appearance of injection mold | good | good | *A | *A | *A | *A | *A | *A | *A | *A | *A | *C | *B | – | *C | *C | *C |

(*1) No sample was prepared because it was impossible to make a strand by extrusion.

*A: Slight layer separation was observed. *B: Layer separation was observed.

*C: Strong layer separation was observed..

(Unit is expressed by part by weight)

Table 12

| Example No. | 99 | 100 | 101 | 102 | 103 | 104 | 105 | 106 | 107 | 108 | 109 | 110 | 111 | 112 | 113 | 114 | 115 | 116 | 117 | 118 | 119 | 120 | 121 | 122 | 123 | 124 | 125 | 126 |
|---|---|---|---|---|---|---|---|---|---|---|---|---|---|---|---|---|---|---|---|---|---|---|---|---|---|---|---|---|
| Polybutyleneterephthalate resin | 100 | 100 | 100 | 100 | 100 | 100 | 100 | 100 | 100 | 100 | 100 | 100 | 100 | 100 | 100 | 100 | 100 | 100 | 100 | 100 | — | — | — | — | — | — | — | — |
| Polyethyleneterephthalate resin | — | — | — | — | — | — | — | — | — | — | — | — | — | — | — | — | — | — | — | — | 100 | 100 | 100 | 100 | 100 | 100 | 100 | 100 |
| Multi phase structure resin A | 10 | 5 | 100 | — | — | — | — | — | — | — | — | — | — | — | — | — | — | — | — | — | 10 | — | — | — | — | — | — | — |
| Multi phase structure resin B | — | — | — | 10 | — | — | — | — | — | — | — | — | — | — | — | — | — | — | — | — | — | 10 | — | — | — | — | — | — |
| Multi phase structure resin D | — | — | — | — | 10 | — | — | — | — | — | — | — | — | — | — | — | — | — | — | — | — | — | 10 | — | — | — | — | — |
| Multi phase structure resin F | — | — | — | — | — | 10 | — | — | — | — | — | — | — | — | — | — | — | — | — | — | — | — | — | 10 | — | — | — | — |
| Multi phase structure resin H | — | — | — | — | — | — | 10 | — | — | — | — | — | — | — | — | — | — | — | — | — | — | — | — | — | 10 | — | — | — |
| Multi phase structure resin A' | — | — | — | — | — | — | — | 10 | — | — | — | — | — | — | — | — | — | — | — | — | — | — | — | — | — | — | — | — |
| Multi phase structure resin J | — | — | — | — | — | — | — | — | 10 | — | — | — | — | — | — | — | — | — | — | — | — | — | — | — | — | — | — | — |
| Multi phase structure resin M | — | — | — | — | — | — | — | — | — | 10 | — | — | — | — | — | — | — | — | — | — | — | — | — | — | — | — | — | — |
| Multi phase structure resin P | — | — | — | — | — | — | — | — | — | — | 10 | — | — | — | — | — | — | — | — | — | — | — | — | — | — | — | — | — |
| Multi phase structure resin U | — | — | — | — | — | — | — | — | — | — | — | 10 | — | — | — | — | — | — | — | — | — | — | — | — | — | 10 | — | — |
| Multi phase structure resin V | — | — | — | — | — | — | — | — | — | — | — | — | 10 | — | — | — | — | — | — | — | — | — | — | — | — | — | — | — |
| Multi phase structure resin Y | — | — | — | — | — | — | — | — | — | — | — | — | — | 10 | — | — | — | — | — | — | — | — | — | — | — | — | — | — |
| Multi phase structure resin b | — | — | — | — | — | — | — | — | — | — | — | — | — | — | 10 | — | — | — | — | — | — | — | — | — | — | — | — | — |
| Multi phase structure resin c | — | — | — | — | — | — | — | — | — | — | — | — | — | — | — | 10 | — | — | — | — | — | — | — | — | — | — | — | — |
| Multi phase structure resin d | — | — | — | — | — | — | — | — | — | — | — | — | — | — | — | — | 10 | — | — | — | — | — | — | — | — | — | 10 | — |
| Multi phase structure resin e | — | — | — | — | — | — | — | — | — | — | — | — | — | — | — | — | — | 10 | — | — | — | — | — | — | — | — | — | — |
| Multi phase structure resin f | — | — | — | — | — | — | — | — | — | — | — | — | — | — | — | — | — | — | 10 | — | — | — | — | — | — | — | — | — |
| Multi phase structure resin g | — | — | — | — | — | — | — | — | — | — | — | — | — | — | — | — | — | — | — | 10 | — | — | — | — | — | — | — | 10 |
| Glass fiber | — | — | — | — | — | — | — | — | — | — | — | — | — | — | — | — | — | — | — | — | 25 | 25 | 25 | 25 | 25 | 25 | 25 | 25 |
| Dynamic friction coefficient | 0.21 | 0.28 | 0.24 | 0.23 | 0.22 | 0.21 | 0.27 | 0.23 | 0.22 | 0.23 | 0.25 | 0.26 | 0.24 | 0.25 | 0.20 | 0.17 | 0.19 | 0.19 | 0.18 | 0.23 | 0.26 | 0.24 | 0.26 | 0.25 | 0.27 | 0.30 | 0.24 | 0.27 |
| Tensile Strength(kgf/mm2) | 5.4 | 5.6 | 4.7 | 5.3 | 5.5 | 5.6 | 5.4 | 5.2 | 5.3 | 5.7 | 5.2 | 5.1 | 5.1 | 5.4 | 5.4 | 5.1 | 5.3 | 5.2 | 5.3 | 4.9 | 11.2 | 11.1 | 11.3 | 11.4 | 11.1 | 10.7 | 11.1 | 10.7 |
| Flexual modulus (kgf/mm2) | 235 | 241 | 221 | 233 | 238 | 240 | 233 | 230 | 228 | 246 | 225 | 224 | 223 | 240 | 236 | 229 | 233 | 233 | 234 | 221 | 741 | 738 | 740 | 740 | 730 | 725 | 740 | 728 |
| Heat deflection temperature | 72 | 75 | 65 | 71 | 73 | 72 | 71 | 71 | 70 | 76 | 70 | 69 | 68 | 72 | 73 | 69 | 70 | 70 | 71 | 67 | 213 | 211 | 210 | 215 | 216 | 208 | 213 | 206 |
| Appearance of injection mold | good | good | good | good | good | good | good | good | good | good | good | good | good | good | good | good | good | good | good | good | good | good | good | good | good | good | good | good |

Table 13

(Unit is expressed by part by weight)

| Comparative Example No. | 50 | 51 | 52 | 53 | 54 | 55 | 56 | 57 | 58 | 59 | 60 | 61 | 62 | 63 | 64 | 65 |
|---|---|---|---|---|---|---|---|---|---|---|---|---|---|---|---|---|
| Polybutylene terephthalate | 100 | 100 | 100 | 100 | 100 | 100 | 100 | 100 | 100 | 100 | 100 | 100 | 100 | 100 | 100 | 100 |
| Multi phase structure thermoplastic resin A | – | 0.1 | 150 | – | – | – | – | – | – | – | – | – | – | – | – | – |
| Multi phase structure thermoplastic resin B | – | – | – | 150 | – | – | – | – | – | – | – | – | – | – | – | – |
| Multi phase structure thermoplastic resin D | – | – | – | – | 150 | – | – | – | – | – | – | – | – | – | – | – |
| Multi phase structure thermoplastic resin F | – | – | – | – | – | 150 | – | – | – | – | – | – | – | – | – | – |
| Multi phase structure thermoplastic resin H | – | – | – | – | – | – | 150 | – | – | – | – | – | – | – | – | – |
| Multi phase structure thermoplastic resin Q | – | – | – | – | – | – | – | 150 | – | – | – | – | – | – | – | – |
| Multi phase structure thermoplastic resin d | – | – | – | – | – | – | – | – | 150 | – | – | – | – | – | – | – |
| Multi phase structure thermoplastic resin g | – | – | – | – | – | – | – | – | – | 150 | – | – | – | – | – | – |
| Low density polyethylene "RexlonF41" | – | – | – | – | – | – | – | – | – | – | 10 | 5 | 100 | – | – | – |
| High density polyethylene "StaflenE780" | – | – | – | – | – | – | – | – | – | – | – | – | – | 10 | – | – |
| Ultra high molecular weight polyethylene "LubmerL4000" | – | – | – | – | – | – | – | – | – | – | – | – | – | – | 10 | – |
| Linear low density polyethylene "LinilexAJ5310" | – | – | – | – | – | – | – | – | – | – | – | – | – | – | – | 10 |
| | | | | | | | | | | | | | | | | |
| Dynamic friction coefficient | 0.51 | 0.45 | 0.26 | 0.27 | 0.26 | 0.25 | 0.24 | 0.28 | 0.24 | 0.25 | 0.37 | 0.42 | (*1) | 0.38 | 0.39 | 0.38 |
| Tensile Strength (kgf/mm2) | 5.8 | 5.7 | 4.2 | 4.1 | 4.3 | 4.4 | 4.2 | 3.9 | 4.1 | 3.7 | 4.9 | 5.1 | – | 1.7 | 4.8 | 4.7 |
| Flexual modulus (kgf/mm2) | 276 | 273 | 203 | 201 | 206 | 208 | 201 | 190 | 201 | 185 | 203 | 212 | – | 205 | 209 | 201 |
| Heat deflection temperature (℃) | 76 | 75 | 59 | 56 | 60 | 59 | 57 | 53 | 56 | 49 | 61 | 67 | – | 61 | 63 | 60 |
| Appearance of injection mold | good | good | *A | *A | *A | *A | *A | *A | *A | *A | *B | *B | – | *C | *C | *C |

(*1) No sample was prepared because it was impossible to make a strand by extrusion.
*A: Slight layer separation was observed. *B: Layer separation was observed.
*C: Strong layer separation was observed.

Table 14

(Unit is expressed by part by weight)

| Example No. | 127 | 128 | 129 | 130 | 131 | 132 | 133 | 134 | 135 | 136 | 137 | 138 | 139 | 140 | 141 | 142 | 143 | 144 | 145 | 146 | 147 | 148 | 149 | 151 | 151 | 152 | 153 | 154 | 155 |
|---|---|---|---|---|---|---|---|---|---|---|---|---|---|---|---|---|---|---|---|---|---|---|---|---|---|---|---|---|---|
| Polyphenylenesulfide resin | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 |
| Multi phase structure resin A | 10 | 5 | 100 | — | — | — | — | — | — | — | — | — | — | — | — | — | — | — | — | — | 10 | 10 | — | — | — | — | — | — | — |
| Multi phase structure resin B | — | — | — | 10 | — | — | — | — | — | — | — | — | — | — | — | — | — | — | — | — | — | — | 10 | — | — | — | — | — | — |
| Multi phase structure resin D | — | — | — | — | 10 | — | — | — | — | — | — | — | — | — | — | — | — | — | — | — | — | — | — | 10 | — | — | — | — | — |
| Multi phase structure resin F | — | — | — | — | — | 10 | — | — | — | — | — | — | — | — | — | — | — | — | — | — | — | — | — | — | 10 | — | — | — | — |
| Multi phase structure resin H | — | — | — | — | — | — | 10 | — | — | — | — | — | — | — | — | — | — | — | — | — | — | — | — | — | — | 10 | — | — | — |
| Multi phase structure resin A' | — | — | — | — | — | — | — | 10 | — | — | — | — | — | — | — | — | — | — | — | — | — | — | — | — | — | — | 10 | — | — |
| Multi phase structure resin J | — | — | — | — | — | — | — | — | 10 | — | — | — | — | — | — | — | — | — | — | — | — | — | — | — | — | — | — | — | — |
| Multi phase structure resin M | — | — | — | — | — | — | — | — | — | 10 | — | — | — | — | — | — | — | — | — | — | — | — | — | — | — | — | — | — | — |
| Multi phase structure resin P | — | — | — | — | — | — | — | — | — | — | 10 | — | — | — | — | — | — | — | — | — | — | — | — | — | — | — | — | — | — |
| Multi phase structure resin Q | — | — | — | — | — | — | — | — | — | — | — | 10 | — | — | — | — | — | — | — | — | — | — | — | — | — | — | — | — | — |
| Multi phase structure resin V | — | — | — | — | — | — | — | — | — | — | — | — | 10 | — | — | — | — | — | — | — | — | — | — | — | — | — | — | — | — |
| Multi phase structure resin Y | — | — | — | — | — | — | — | — | — | — | — | — | — | 10 | — | — | — | — | — | — | — | — | — | — | — | — | — | — | — |
| Multi phase structure resin b | — | — | — | — | — | — | — | — | — | — | — | — | — | — | 10 | — | — | — | — | — | — | — | — | — | — | — | — | — | — |
| Multi phase structure resin c | — | — | — | — | — | — | — | — | — | — | — | — | — | — | — | 10 | — | — | — | — | — | — | — | — | — | — | — | — | — |
| Multi phase structure resin d | — | — | — | — | — | — | — | — | — | — | — | — | — | — | — | — | 10 | — | — | — | — | — | — | — | — | — | — | 10 | — |
| Multi phase structure resin e | — | — | — | — | — | — | — | — | — | — | — | — | — | — | — | — | — | 10 | — | — | — | — | — | — | — | — | — | — | — |
| Multi phase structure resin f | — | — | — | — | — | — | — | — | — | — | — | — | — | — | — | — | — | — | 10 | — | — | — | — | — | — | — | — | — | — |
| Multi phase structure resin g | — | — | — | — | — | — | — | — | — | — | — | — | — | — | — | — | — | — | — | 10 | — | — | — | — | — | — | — | — | 10 |
| Glass fiber | — | — | — | — | — | — | — | — | — | — | — | — | — | — | — | — | — | — | — | — | 70 | 20 | 70 | 70 | 70 | 70 | 70 | 70 | 70 |
| Dynamic friction coefficient | 0.21 | 0.27 | 0.23 | 0.26 | 0.24 | 0.21 | 0.24 | 0.22 | 0.24 | 0.23 | 0.25 | 0.26 | 0.26 | 0.26 | 0.20 | 0.18 | 0.19 | 0.19 | 0.20 | 0.24 | 0.25 | 0.29 | 0.25 | 0.26 | 0.25 | 0.24 | 0.27 | 0.22 | 0.28 |
| Tensile Strength(kgf/mm2) | 6.3 | 6.5 | 5.8 | 6.2 | 6.4 | 6.3 | 6.2 | 6.1 | 6.0 | 6.1 | 5.9 | 5.8 | 5.8 | 5.9 | 6.3 | 6.0 | 6.1 | 6.2 | 6.1 | 5.5 | 13.8 | 11.9 | 13.6 | 13.7 | 13.9 | 14.0 | 13.6 | 13.8 | 13.2 |
| Flexual modulus(kgf/mm2) | 345 | 360 | 313 | 340 | 348 | 352 | 340 | 339 | 335 | 341 | 333 | 332 | 332 | 338 | 344 | 342 | 344 | 343 | 344 | 324 | 1130 | 960 | 1105 | 1150 | 1138 | 1140 | 1129 | 1128 | 1118 |
| Heat deflection temperature | 121 | 127 | 109 | 117 | 119 | 124 | 120 | 119 | 117 | 122 | 115 | 116 | 115 | 119 | 122 | 116 | 119 | 118 | 120 | 111 | >250 | >260 | >260 | >260 | >260 | >260 | >260 | >260 | >260 |
| Appearance of injection mold | good | good | good | good | good | good | good | good | good | good | good | good | good | good | good | good | good | good | good | good | good | good | good | good | good | good | good | good | good |

Table 15

(Unit is expressed by part by weight)

| Comparative Example No. | 66 | 67 | 68 | 69 | 70 | 71 | 72 | 73 | 74 | 75 | 76 | 77 | 78 | 79 | 80 | 81 |
|---|---|---|---|---|---|---|---|---|---|---|---|---|---|---|---|---|
| Polyphenylenesulfide rsin | 100 | 100 | 100 | 100 | 100 | 100 | 100 | 100 | 100 | 100 | 100 | 100 | 100 | 100 | 100 | 100 |
| Multi phase structure thermoplastic resin A | — | 0.1 | 150 | — | — | — | — | — | — | — | — | — | — | — | — | — |
| Multi phase structure thermoplastic resin B | — | — | — | 150 | — | — | — | — | — | — | — | — | — | — | — | — |
| Multi phase structure thermoplastic resin D | — | — | — | — | 150 | — | — | — | — | — | — | — | — | — | — | — |
| Multi phase structure thermoplastic resin F | — | — | — | — | — | 150 | — | — | — | — | — | — | — | — | — | — |
| Multi phase structure thermoplastic resin H | — | — | — | — | — | — | 150 | — | — | — | — | — | — | — | — | — |
| Multi phase structure thermoplastic resin Q | — | — | — | — | — | — | — | 150 | — | — | — | — | — | — | — | — |
| Multi phase structure thermoplastic resin d | — | — | — | — | — | — | — | — | 150 | — | — | — | — | — | — | — |
| Multi phase structure thermoplastic resin g | — | — | — | — | — | — | — | — | — | 150 | — | — | — | — | — | — |
| Low density polyethylene "RexlonF41" | — | — | — | — | — | — | — | — | — | — | 5 | 10 | 100 | — | — | — |
| High density polyethylene "StaflenE780" | — | — | — | — | — | — | — | — | — | — | — | — | — | 25 | — | — |
| Ultra high molecular weight polyethylene"LubmerL4000" | — | — | — | — | — | — | — | — | — | — | — | — | — | — | 25 | — |
| Linear low density polyethylene"LinilexAJ5310" | — | — | — | — | — | — | — | — | — | — | — | — | — | — | — | 25 |
| | | | | | | | | | | | | | | | | |
| Dynamic friction coefficient | 0.62 | 0.61 | 0.29 | 0.31 | 0.29 | 0.31 | 0.29 | 0.31 | 0.26 | 0.28 | 0.41 | 0.33 | (*1) | (1*) | (*1) | 0.34 |
| Tensile Strength(kgf/mm2) | 6.6 | 6.6 | 4.8 | 4.6 | 4.9 | 5.0 | 4.8 | 4.4 | 4.6 | 4.1 | 6.1 | 5.7 | — | — | — | 5.6 |
| Flexual modulus (kgf/mm2) | 378 | 378 | 287 | 283 | 288 | 291 | 283 | 273 | 272 | 266 | 330 | 331 | — | — | — | 295 |
| Heat deflection temperature (℃) | 132 | 133 | 101 | 100 | 101 | 103 | 101 | 96 | 96 | 91 | 117 | 111 | — | — | — | 110 |
| Appearance of injection mold | good | good | *A | *A | *A | *A | *A | *A | *A | *A | *B | *C | — | — | — | *C |

(*1) No sample was prepared because it was impossible to make a strand by extrusion.
*A: Slight layer separation was observed. *B: Layer separation was observed.
*C: Strong layer separation was observed.

(Unit is expressed by part by weight)

Table 6-1

| Example No. | 156 | 157 | 158 | 159 | 160 | 161 | 162 | 163 | 164 | 165 | 166 | 167 | 168 | 169 | 170 | 171 | 172 | 173 | 174 | 175 | 176 | 177 | 178 | 179 | 180 | 181 |
|---|---|---|---|---|---|---|---|---|---|---|---|---|---|---|---|---|---|---|---|---|---|---|---|---|---|---|
| Nylon 6 resin | 100 | 100 | 100 | 100 | 100 | 100 | 100 | 100 | 100 | 100 | 100 | 100 | 100 | 100 | 100 | 100 | 100 | 100 | 100 | 100 | — | — | — | — | — | — |
| Nylon 66 resin | — | — | — | — | — | — | — | — | — | — | — | — | — | — | — | — | — | — | — | — | 100 | 100 | 100 | 100 | 100 | 100 |
| Nylon MXD 6 resin | — | — | — | — | — | — | — | — | — | — | — | — | — | — | — | — | — | — | — | — | — | — | — | — | — | — |
| Multi phase structure resin A | 0 | 5 | 100 | — | — | — | — | — | — | — | — | — | — | — | — | — | — | — | — | — | 10 | — | — | — | — | — |
| Multi phase structure resin B | — | — | — | 10 | — | — | — | — | — | — | — | — | — | — | — | — | — | — | — | — | — | 10 | — | — | — | — |
| Multi phase structure resin D | — | — | — | — | 10 | — | — | — | — | — | — | — | — | — | — | — | — | — | — | — | — | — | 10 | — | — | — |
| Multi phase structure resin F | — | — | — | — | — | 10 | — | — | — | — | — | — | — | — | — | — | — | — | — | — | — | — | — | 10 | — | — |
| Multi phase structure resin H | — | — | — | — | — | — | 10 | — | — | — | — | — | — | — | — | — | — | — | — | — | — | — | — | — | 10 | — |
| Multi phase structure resin A' | — | — | — | — | — | — | — | 10 | — | — | — | — | — | — | — | — | — | — | — | — | — | — | — | — | — | 10 |
| Multi phase structure resin J | — | — | — | — | — | — | — | — | 10 | — | — | — | — | — | — | — | — | — | — | — | — | — | — | — | — | — |
| Multi phase structure resin M | — | — | — | — | — | — | — | — | — | 10 | — | — | — | — | — | — | — | — | — | — | — | — | — | — | — | — |
| Multi phase structure resin P | — | — | — | — | — | — | — | — | — | — | 10 | — | — | — | — | — | — | — | — | — | — | — | — | — | — | — |
| Multi phase structure resin Q | — | — | — | — | — | — | — | — | — | — | — | 10 | — | — | — | — | — | — | — | — | — | — | — | — | — | — |
| Multi phase structure resin V | — | — | — | — | — | — | — | — | — | — | — | — | 10 | — | — | — | — | — | — | — | — | — | — | — | — | — |
| Multi phase structure resin Y | — | — | — | — | — | — | — | — | — | — | — | — | — | 10 | — | — | — | — | — | — | — | — | — | — | — | — |
| Multi phase structure resin b | — | — | — | — | — | — | — | — | — | — | — | — | — | — | 10 | — | — | — | — | — | — | — | — | — | — | — |
| Multi phase structure resin c | — | — | — | — | — | — | — | — | — | — | — | — | — | — | — | 10 | — | — | — | — | — | — | — | — | — | — |
| Multi phase structure resin d | — | — | — | — | — | — | — | — | — | — | — | — | — | — | — | — | 10 | — | — | — | — | — | — | — | — | — |
| Multi phase structure resin e | — | — | — | — | — | — | — | — | — | — | — | — | — | — | — | — | — | 10 | — | — | — | — | — | — | — | — |
| Multi phase structure resin f | — | — | — | — | — | — | — | — | — | — | — | — | — | — | — | — | — | — | 10 | — | — | — | — | — | — | — |
| Multi phase structure resin g | — | — | — | — | — | — | — | — | — | — | — | — | — | — | — | — | — | — | — | 10 | — | — | — | — | — | — |
| Glass fiber | — | — | — | — | — | — | — | — | — | — | — | — | — | — | — | — | — | — | — | — | 25 | 25 | 25 | 25 | 25 | 25 |
| Dynamic friction coefficient | 0.22 | 0.27 | 0.25 | 0.23 | 0.23 | 0.23 | 0.24 | 0.24 | 0.23 | 0.24 | 0.29 | 0.29 | 0.25 | 0.27 | 0.21 | 0.13 | 0.19 | 0.18 | 0.18 | 0.27 | 0.27 | 0.28 | 0.26 | 0.25 | 0.28 | 0.30 |
| Tensile Strength(kgf/mm2) | 3.5 | 3.7 | 3.1 | 3.4 | 3.6 | 3.7 | 3.5 | 3.4 | 3.3 | 3.7 | 3.3 | 3.2 | 3.1 | 3.5 | 3.5 | 3.3 | 3.4 | 3.4 | 3.4 | 3.0 | 8.7 | 8.6 | 8.8 | 8.9 | 8.7 | 8.4 |
| Flexual modulus (kgf/mm2) | 72 | 74 | 68 | 71 | 75 | 77 | 73 | 70 | 68 | 76 | 68 | 69 | 65 | 73 | 72 | 70 | 71 | 71 | 71 | 66 | 376 | 373 | 378 | 382 | 375 | 357 |
| Heat deflection temperature | 67 | 70 | 63 | 66 | 68 | 69 | 68 | 65 | 64 | 72 | 63 | 62 | 61 | 70 | 67 | 64 | 66 | 65 | 66 | 58 | 243 | 241 | 244 | 243 | 242 | 238 |
| Appearance of injection mold | good | good | good | good | good | good | good | good | good | good | good | good | good | good | good | good | good | good | good | good | good | good | good | good | good | good |

to be continued

(Unit is expressed by part by weight)

Table 16-2

| Example No. | 182 | 183 | 184 | 185 | 186 | 187 | 188 | 189 | 190 | 191 |
|---|---|---|---|---|---|---|---|---|---|---|
| Nylon 6 resin | — | — | — | — | — | — | — | — | — | — |
| Nylon 66 resin | 100 | 100 | — | — | — | — | — | — | — | — |
| Nylon MXD 6 resin | | | 100 | 100 | 100 | 100 | 100 | 100 | 100 | 100 |
| Multi phase structure resin A | — | — | 10 | — | — | — | — | — | — | — |
| Multi phase structure resin B | — | — | — | 10 | — | — | — | — | — | — |
| Multi phase structure resin D | — | — | — | — | 10 | — | — | — | — | — |
| Multi phase structure resin F | — | — | — | — | — | 10 | — | — | — | — |
| Multi phase structure resin H | — | — | — | — | — | — | 10 | — | — | — |
| Multi phase structure resin A' | — | — | — | — | — | — | — | — | — | — |
| Multi phase structure resin J | — | — | — | — | — | — | — | — | — | — |
| Multi phase structure resin M | — | — | — | — | — | — | — | — | — | — |
| Multi phase structure resin P | — | — | — | — | — | — | — | — | — | — |
| Multi phase structure resin Q | — | — | — | — | — | — | — | 10 | — | — |
| Multi phase structure resin V | — | — | — | — | — | — | — | — | — | — |
| Multi phase structure resin Y | — | — | — | — | — | — | — | — | — | — |
| Multi phase structure resin b | — | — | — | — | — | — | — | — | — | — |
| Multi phase structure resin c | — | — | — | — | — | — | — | — | — | — |
| Multi phase structure resin d | 10 | — | — | — | — | — | — | — | 10 | — |
| Multi phase structure resin e | — | — | — | — | — | — | — | — | — | — |
| Multi phase structure resin f | — | — | — | — | — | — | — | — | — | — |
| Multi phase structure resin g | — | 10 | — | — | — | — | — | — | — | 10 |
| Glass fiber | 25 | 25 | — | — | — | — | — | — | — | — |
| Dynamic friction coefficient | 0.25 | 0.27 | 0.24 | 0.25 | 0.25 | 0.24 | 0.25 | 0.28 | 0.22 | 0.25 |
| Tensile Strength(kgf/mm2) | 8.5 | 8.2 | 7.0 | 6.9 | 7.1 | 7.2 | 7.0 | 6.7 | 6.9 | 6.5 |
| Flexual modulus (kgf/mm2) | 374 | 364 | 371 | 369 | 375 | 378 | 372 | 365 | 368 | 360 |
| Heat deflection temperature | 241 | 235 | 82 | 81 | 84 | 83 | 82 | 78 | 80 | 75 |
| Appearance of injection mold | good | good | good | good | good | good | good | good | good | good |

Table 17

(Unit is expressed by pa by weight)

| Comparative Example No. | 82 | 83 | 84 | 85 | 86 | 87 | 88 | 89 | 90 | 91 | 92 | 93 | 94 | 95 | 96 | 97 |
|---|---|---|---|---|---|---|---|---|---|---|---|---|---|---|---|---|
| Polyphenylenesulfide rsin | 100 | 100 | 100 | 100 | 100 | 100 | 100 | 100 | 100 | 100 | 100 | 100 | 100 | 100 | 100 | 100 |
| Multi phase structure thermoplastic resin A | – | 0.1 | 150 | – | – | – | – | – | – | – | – | – | – | – | – | – |
| Multi phase structure thermoplastic resin B | – | – | – | 150 | – | – | – | – | – | – | – | – | – | – | – | – |
| Multi phase structure thermoplastic resin D | – | – | – | – | 150 | – | – | – | – | – | – | – | – | – | – | – |
| Multi phase structure thermoplastic resin F | – | – | – | – | – | 150 | – | – | – | – | – | – | – | – | – | – |
| Multi phase structure thermoplastic resin H | – | – | – | – | – | – | 150 | – | – | – | – | – | – | – | – | – |
| Multi phase structure thermoplastic resin Q | – | – | – | – | – | – | – | 150 | – | – | – | – | – | – | – | – |
| Multi phase structure thermoplastic resin d | – | – | – | – | – | – | – | – | 150 | – | – | – | – | – | – | – |
| Multi phase structure thermoplastic resin g | – | – | – | – | – | – | – | – | – | 150 | – | – | – | – | – | – |
| Low density polyethylene "RexlonF41" | – | – | – | – | – | – | – | – | – | – | 10 | 5 | 100 | – | – | – |
| High density polyethylene "StaflenE780" | – | – | – | – | – | – | – | – | – | – | – | – | – | 10 | – | – |
| Ultra high molecular weight polyethylene"LubmerL4000" | – | – | – | – | – | – | – | – | – | – | – | – | – | – | 10 | – |
| Linear low density polyethylene"LinilexAJ5310" | – | – | – | – | – | – | – | – | – | – | – | – | – | – | – | 10 |
| | | | | | | | | | | | | | | | | |
| Dynamic friction coefficient | 0.61 | 0.60 | 0.29 | 0.30 | 0.31 | 0.30 | 0.30 | 0.33 | 0.27 | 0.30 | 0.33 | 0.42 | (*1) | 0.34 | 0.36 | 0.35 |
| Tensile Strength(kgf/mm2) | 4.1 | 4.1 | 2.8 | 2.7 | 2.9 | 2.9 | 2.8 | 2.5 | 2.6 | 2.2 | 2.9 | 3.3 | – | 3.0 | 3.1 | 2.8 |
| Flexual modulus (kgf/mm2) | 76 | 76 | 64 | 63 | 66 | 67 | 63 | 60 | 62 | 56 | 63 | 66 | – | 65 | 66 | 61 |
| Heat deflection temperature (℃) | 76 | 76 | 58 | 55 | 58 | 59 | 57 | 52 | 55 | 49 | 58 | 62 | – | 60 | 59 | 57 |
| Appearance of injection mold | good | good | *A | *A | *A | *A | *A | *A | *A | *A | *C | *B | – | *C | *C | *C |

(*1) No sample was prepared because it was impossible to make a strand by extrusion.

*A: Slight layer separation was observed. *B: Layer separation was observed.

*C: Strong layer separation was observed.

(Unit is expressed by part by weight)

Table 18

| Example No. | 192 | 193 | 194 | 195 | 196 | 197 | 198 | 199 | 200 | 201 | 202 | 203 | 204 | 205 | 206 | 207 | 208 | 209 | 210 | 211 | 212 | 213 | 214 | 215 | 216 | 217 | 218 | 219 |
|---|---|---|---|---|---|---|---|---|---|---|---|---|---|---|---|---|---|---|---|---|---|---|---|---|---|---|---|---|
| Modified polyphenylene ether | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 |
| Polyphenylene ether resin | — | — | — | — | — | — | — | — | — | — | — | — | — | — | — | — | — | — | — | — | — | — | — | — | — | — | — | — |
| Multi phase structure resin C | 10 | 5 | 100 | — | — | — | — | — | — | — | — | — | — | — | — | — | — | — | — | — | 10 | — | — | — | — | — | — | — |
| Multi phase structure resin A | — | — | — | 10 | — | — | — | — | — | — | — | — | — | — | — | — | — | — | — | — | — | 10 | — | — | — | — | — | — |
| Multi phase structure resin E | — | — | — | — | 10 | — | — | — | — | — | — | — | — | — | — | — | — | — | — | — | — | — | 10 | — | — | — | — | — |
| Multi phase structure resin G | — | — | — | — | — | 10 | — | — | — | — | — | — | — | — | — | — | — | — | — | — | — | — | — | 10 | — | — | — | — |
| Multi phase structure resin I | — | — | — | — | — | — | 10 | — | — | — | — | — | — | — | — | — | — | — | — | — | — | — | — | — | 10 | — | — | — |
| Multi phase structure resin C' | — | — | — | — | — | — | — | 10 | — | — | — | — | — | — | — | — | — | — | — | — | — | — | — | — | — | 10 | — | — |
| Multi phase structure resin L | — | — | — | — | — | — | — | — | 10 | — | — | — | — | — | — | — | — | — | — | — | — | — | — | — | — | — | — | — |
| Multi phase structure resin O | — | — | — | — | — | — | — | — | — | 10 | — | — | — | — | — | — | — | — | — | — | — | — | — | — | — | — | — | — |
| Multi phase structure resin T | — | — | — | — | — | — | — | — | — | — | 10 | — | — | — | — | — | — | — | — | — | — | — | — | — | — | — | — | — |
| Multi phase structure resin U | — | — | — | — | — | — | — | — | — | — | — | 10 | — | — | — | — | — | — | — | — | — | — | — | — | — | — | — | — |
| Multi phase structure resin X | — | — | — | — | — | — | — | — | — | — | — | — | 10 | — | — | — | — | — | — | — | — | — | — | — | — | — | — | — |
| Multi phase structure resin a | — | — | — | — | — | — | — | — | — | — | — | — | — | 10 | — | — | — | — | — | — | — | — | — | — | — | — | — | — |
| Multi phase structure resin b | — | — | — | — | — | — | — | — | — | — | — | — | — | — | 10 | — | — | — | — | — | — | — | — | — | — | — | — | — |
| Multi phase structure resin c | — | — | — | — | — | — | — | — | — | — | — | — | — | — | — | 10 | — | — | — | — | — | — | — | — | — | — | — | — |
| Multi phase structure resin d | — | — | — | — | — | — | — | — | — | — | — | — | — | — | — | — | 10 | — | — | — | — | — | — | — | — | — | 10 | — |
| Multi phase structure resin e | — | — | — | — | — | — | — | — | — | — | — | — | — | — | — | — | — | 10 | — | — | — | — | — | — | — | — | — | — |
| Multi phase structure resin f | — | — | — | — | — | — | — | — | — | — | — | — | — | — | — | — | — | — | 10 | — | — | — | — | — | — | — | — | — |
| Multi phase structure resin i | — | — | — | — | — | — | — | — | — | — | — | — | — | — | — | — | — | — | — | 10 | — | — | — | — | — | — | — | 10 |
| Glass fiber | — | — | — | — | — | — | — | — | — | — | — | — | — | — | — | — | — | — | — | — | 25 | 25 | 25 | 25 | 25 | 25 | 25 | 25 |
| Dynamic friction coefficient | 0.20 | 0.29 | 0.23 | 0.22 | 0.20 | 0.19 | 0.21 | 0.22 | 0.22 | 0.21 | 0.24 | 0.25 | 0.26 | 0.25 | 0.21 | 0.17 | 0.19 | 0.18 | 0.18 | 0.23 | 0.26 | 0.24 | 0.26 | 0.25 | 0.27 | 0.28 | 0.23 | 0.30 |
| Tensile Strength(kgf/mm2) | 6.2 | 6.3 | 5.8 | 6.1 | 6.3 | 6.3 | 6.2 | 6.1 | 6.0 | 6.1 | 5.9 | 5.8 | 5.8 | 5.9 | 6.1 | 5.8 | 5.9 | 6.0 | 6.0 | 5.6 | 10.0 | 9.8 | 10.2 | 10.1 | 10.0 | 9.9 | 9.9 | 9.5 |
| Flexual modulus (kgf/mm2) | 240 | 244 | 220 | 242 | 245 | 247 | 238 | 235 | 234 | 238 | 231 | 228 | 229 | 234 | 242 | 235 | 237 | 237 | 238 | 224 | 495 | 496 | 498 | 498 | 496 | 493 | 494 | 478 |
| Heat deflection temperature | 118 | 120 | 110 | 119 | 120 | 122 | 117 | 116 | 115 | 119 | 113 | 111 | 112 | 116 | 118 | 111 | 114 | 114 | 115 | 106 | 131 | 120 | 133 | 132 | 129 | 128 | 128 | 125 |
| Appearance of injection mold | good | good | good | good | good | good | good | good | good | good | good | good | good | good | good | good | good | good | good | good | good | good | good | good | good | good | good | good |

to be continued

(Unit is expressed by part by weight.) Table 18 - 2

| Example No. | 220 | 221 | 222 | 223 | 224 | 225 | 226 | 227 |
|---|---|---|---|---|---|---|---|---|
| Modified polyphenylene ether | — | — | — | — | — | — | — | — |
| Polyphenylene ether resin | 100 | 100 | 100 | 100 | 100 | 100 | 100 | 100 |
| Multi phase structure resin C | 10 | — | — | — | — | — | — | — |
| Multi phase structure resin A | — | 10 | — | — | — | — | — | — |
| Multi phase structure resin E | — | — | 10 | — | — | — | — | — |
| Multi phase structure resin G | — | — | — | 10 | — | — | — | — |
| Multi phase structure resin I | — | — | — | — | 10 | — | — | — |
| Multi phase structure resin C' | — | — | — | — | — | 10 | — | — |
| Multi phase structure resin L | — | — | — | — | — | — | — | — |
| Multi phase structure resin O | — | — | — | — | — | — | — | — |
| Multi phase structure resin T | — | — | — | — | — | — | — | — |
| Multi phase structure resin U | — | — | — | — | — | — | — | — |
| Multi phase structure resin X | — | — | — | — | — | — | — | — |
| Multi phase structure resin a | — | — | — | — | — | — | — | — |
| Multi phase structure resin b | — | — | — | — | — | — | — | — |
| Multi phase structure resin c | — | — | — | — | — | — | — | — |
| Multi phase structure resin d | — | — | — | — | — | — | 10 | — |
| Multi phase structure resin e | — | — | — | — | — | — | — | — |
| Multi phase structure resin f | — | — | — | — | — | — | — | — |
| Multi phase structure resin i | — | — | — | — | — | — | — | 10 |
| Glass fiber | — | — | — | — | — | — | — | |
| Dynamic friction coefficient | 0.22 | 0.24 | 0.21 | 0.20 | 0.22 | 0.21 | 0.20 | 0.22 |
| Tensile Strength(kgf/mm2) | 7.5 | 7.6 | 7.7 | 7.6 | 7.7 | 7.3 | 7.3 | 7.0 |
| Flexual modulus (kgf/mm2) | 261 | 263 | 265 | 268 | 259 | 257 | 258 | 252 |
| Heat deflection temperature | 159 | 160 | 159 | 161 | 157 | 159 | 157 | 154 |
| Appearance of injection mold | good | good | good | good | good | good | good | good |

Table 19

(Unit is expressed by part by weight)

| Comparative Example No. | 98 | 99 | 100 | 101 | 102 | 103 | 104 | 105 | 106 | 107 | 108 | 109 | 110 | 111 | 112 | 113 |
|---|---|---|---|---|---|---|---|---|---|---|---|---|---|---|---|---|
| Modified polyphenylene ether | 100 | 100 | 100 | 100 | 100 | 100 | 100 | 100 | 100 | 100 | 100 | 100 | 100 | 100 | 100 | 100 |
| Multi phase structure thermoplastic resin C | — | 0.1 | 150 | — | — | — | — | — | — | — | — | — | — | — | — | — |
| Multi phase structure thermoplastic resin A | — | — | — | 150 | — | — | — | — | — | — | — | — | — | — | — | — |
| Multi phase structure thermoplastic resin E | — | — | — | — | 150 | — | — | — | — | — | — | — | — | — | — | — |
| Multi phase structure thermoplastic resin G | — | — | — | — | — | 150 | — | — | — | — | — | — | — | — | — | — |
| Multi phase structure thermoplastic resin I | — | — | — | — | — | — | 150 | — | — | — | — | — | — | — | — | — |
| Multi phase structure thermoplastic resin U | — | — | — | — | — | — | — | 150 | — | — | — | — | — | — | — | — |
| Multi phase structure thermoplastic resin d | — | — | — | — | — | — | — | — | 150 | — | — | — | — | — | — | — |
| Multi phase structure thermoplastic resin g | — | — | — | — | — | — | — | — | — | 150 | — | — | — | — | — | — |
| Low density polyethylene "RexlonF41" | — | — | — | — | — | — | — | — | — | — | 10 | 5 | 100 | — | — | — |
| High density polyethylene "StaflenE780" | — | — | — | — | — | — | — | — | — | — | — | — | — | 10 | — | — |
| Ultra high molecular weight polyethylene"LubmerL4000" | — | — | — | — | — | — | — | — | — | — | — | — | — | — | 10 | — |
| Linear low density polyethylene"LinilexAJ5310" | — | — | — | — | — | — | — | — | — | — | — | — | — | — | — | 10 |
| | | | | | | | | | | | | | | | | |
| Dynamic friction coefficient | 0.65 | 0.65 | 0.29 | 0.30 | 0.31 | 0.31 | 0.32 | 0.35 | 0.26 | 0.30 | 0.37 | 0.51 | (*1) | (*1) | (*1) | 0.39 |
| Tensile Strength(kgf/mm2) | 6.5 | 6.5 | 5.4 | 5.3 | 5.5 | 5.5 | 5.4 | 5.1 | 5.0 | 4.8 | 5.4 | 5.6 | — | — | — | 5.3 |
| Flexual modulus (kgf/mm2) | 251 | 250 | 205 | 203 | 206 | 207 | 204 | 194 | 197 | 190 | 218 | 224 | — | — | — | 214 |
| Heat deflection temperature (℃) | 129 | 128 | 99 | 98 | 100 | 101 | 99 | 95 | 95 | 90 | 83 | 86 | — | — | — | 82 |
| Appearance of injection mold | good | good | *A | *A | *A | *A | *A | *A | *A | *A | *C | *B | — | — | — | *C |

(*1) No sample was prepared because it was impossible to make a strand by extrusion.
*A: Slight layer separation was observed. *B: Layer separation was observed.
*C: Strong layer separation was observed.

(Unit is expressed by part by weight)

Table 20

| Example No. | 228 | 229 | 230 | 231 | 232 | 233 | 234 | 235 | 236 | 237 | 238 | 239 | 240 | 241 |
|---|---|---|---|---|---|---|---|---|---|---|---|---|---|---|
| Polyalylate resin | 100 | 100 | 100 | 100 | 100 | 100 | 100 | 100 | 100 | 100 | 100 | 100 | 100 | 100 |
| Multi phase structure resin A | 10 | 5 | 100 | — | — | — | — | — | — | — | — | — | — | — |
| Multi phase structure resin C | — | — | — | 10 | — | — | — | — | — | — | — | — | — | — |
| Multi phase structure resin D | — | — | — | — | 10 | — | — | — | — | — | — | — | — | — |
| Multi phase structure resin F | — | — | — | — | — | 10 | — | — | — | — | — | — | — | — |
| Multi phase structure resin H | — | — | — | — | — | — | 10 | — | — | — | — | — | — | — |
| Multi phase structure resin A' | — | — | — | — | — | — | — | 10 | — | — | — | — | — | — |
| Multi phase structure resin J | — | — | — | — | — | — | — | — | 10 | — | — | — | — | — |
| Multi phase structure resin M | — | — | — | — | — | — | — | — | — | 10 | — | — | — | — |
| Multi phase structure resin P | — | — | — | — | — | — | — | — | — | — | 10 | — | — | — |
| Multi phase structure resin Q | — | — | — | — | — | — | — | — | — | — | — | 10 | — | — |
| Multi phase structure resin V | — | — | — | — | — | — | — | — | — | — | — | — | 10 | — |
| Multi phase structure resin Y | — | — | — | — | — | — | — | — | — | — | — | — | — | 10 |
| Multi phase structure resin b | — | — | — | — | — | — | — | — | — | — | — | — | — | — |
| Multi phase structure resin c | — | — | — | — | — | — | — | — | — | — | — | — | — | — |
| Multi phase structure resin d | — | — | — | — | — | — | — | — | — | — | — | — | — | — |
| Multi phase structure resin e | — | — | — | — | — | — | — | — | — | — | — | — | — | — |
| Multi phase structure resin f | — | — | — | — | — | — | — | — | — | — | — | — | — | — |
| Multi phase structure resin g | — | — | — | — | — | — | — | — | — | — | — | — | — | — |
| Glass fiber | — | — | — | — | — | — | — | — | — | — | — | — | — | — |
| Dynamic friction coefficient | 0.21 | 0.25 | 0.23 | 0.22 | 0.20 | 0.20 | 0.22 | 0.23 | 0.23 | 0.21 | 0.24 | 0.25 | 0.26 | 0.25 |
| Tensile Strength(kgf/mm2) | 6.7 | 6.8 | 6.3 | 6.6 | 6.7 | 6.7 | 6.6 | 6.6 | 6.6 | 6.7 | 6.5 | 6.4 | 6.5 | 6.5 |
| Flexual modulus (kgf/mm2) | 182 | 186 | 179 | 178 | 184 | 186 | 180 | 177 | 180 | 184 | 178 | 177 | 176 | 178 |
| Heat deflection temperature | 161 | 165 | 155 | 159 | 162 | 163 | 160 | 162 | 158 | 163 | 155 | 152 | 155 | 156 |
| Appearance of injection mold | good | good | good | good | good | good | good | good | good | good | good | good | good | good |

| Example No. | 242 | 243 | 244 | 245 | 246 | 247 | 248 | 249 | 250 | 251 | 252 | 253 | 254 | 255 |
|---|---|---|---|---|---|---|---|---|---|---|---|---|---|---|
| Polyalylate resin | 100 | 100 | 100 | 100 | 100 | 100 | 100 | 100 | 100 | 100 | 100 | 100 | 100 | 100 |
| Multi phase structure resin A | — | — | — | — | — | — | 10 | — | — | — | — | — | — | — |
| Multi phase structure resin C | — | — | — | — | — | — | — | 10 | — | — | — | — | — | — |
| Multi phase structure resin D | — | — | — | — | — | — | — | — | 10 | — | — | — | — | — |
| Multi phase structure resin F | — | — | — | — | — | — | — | — | — | 10 | — | — | — | — |
| Multi phase structure resin H | — | — | — | — | — | — | — | — | — | — | 10 | — | — | — |
| Multi phase structure resin A' | — | — | — | — | — | — | — | — | — | — | — | 10 | — | — |
| Multi phase structure resin J | — | — | — | — | — | — | — | — | — | — | — | — | — | — |
| Multi phase structure resin M | — | — | — | — | — | — | — | — | — | — | — | — | — | — |
| Multi phase structure resin P | — | — | — | — | — | — | — | — | — | — | — | — | — | — |
| Multi phase structure resin Q | — | — | — | — | — | — | — | — | — | — | — | — | — | — |
| Multi phase structure resin V | — | — | — | — | — | — | — | — | — | — | — | — | — | — |
| Multi phase structure resin Y | — | — | — | — | — | — | — | — | — | — | — | — | — | — |
| Multi phase structure resin b | 10 | — | — | — | — | — | — | — | — | — | — | — | — | — |
| Multi phase structure resin c | — | 10 | — | — | — | — | — | — | — | — | — | — | — | — |
| Multi phase structure resin d | — | — | 10 | — | — | — | — | — | — | — | — | — | 10 | — |
| Multi phase structure resin e | — | — | — | 10 | — | — | — | — | — | — | — | — | — | — |
| Multi phase structure resin f | — | — | — | — | 10 | — | — | — | — | — | — | — | — | — |
| Multi phase structure resin g | — | — | — | — | — | 10 | — | — | — | — | — | — | — | 10 |
| Glass fiber | — | — | — | — | — | — | 43 | 43 | 43 | 43 | 43 | 43 | 43 | 43 |
| Dynamic friction coefficient | 0.20 | 0.16 | 0.18 | 0.19 | 0.17 | 0.23 | 0.26 | 0.29 | 0.27 | 0.28 | 0.27 | 0.30 | 0.23 | 0.32 |
| Tensile Strength(kgf/mm2) | 6.7 | 6.4 | 6.5 | 6.5 | 6.5 | 6.1 | 13.0 | 12.9 | 13.1 | 13.0 | 12.9 | 12.8 | 12.9 | 12.1 |
| Flexual modulus (kgf/mm2) | 182 | 177 | 179 | 180 | 179 | 173 | 560 | 553 | 562 | 559 | 557 | 553 | 559 | 550 |
| Heat deflection temperature | 161 | 156 | 158 | 158 | 157 | 148 | 167 | 164 | 168 | 168 | 166 | 163 | 166 | 157 |
| Appearance of injection mold | good | good | good | good | good | good | good | good | good | good | good | good | good | good |

Table 21

(Unit is expressed by part by weight)

| Comparative Example No. | 114 | 115 | 116 | 117 | 118 | 119 | 120 | 121 | 122 | 123 | 124 | 125 | 126 | 127 | 128 | 129 |
|---|---|---|---|---|---|---|---|---|---|---|---|---|---|---|---|---|
| Polyalylate resin | 100 | 100 | 100 | 100 | 100 | 100 | 100 | 100 | 100 | 100 | 100 | 100 | 100 | 100 | 100 | 100 |
| Multi phase structure thermoplastic resin A | — | 0.1 | 150 | — | — | — | — | — | — | — | — | — | — | — | — | — |
| Multi phase structure thermoplastic resin C | — | — | — | 150 | — | — | — | — | — | — | — | — | — | — | — | — |
| Multi phase structure thermoplastic resin D | — | — | — | — | 150 | — | — | — | — | — | — | — | — | — | — | — |
| Multi phase structure thermoplastic resin F | — | — | — | — | — | 150 | — | — | — | — | — | — | — | — | — | — |
| Multi phase structure thermoplastic resin H | — | — | — | — | — | — | 150 | — | — | — | — | — | — | — | — | — |
| Multi phase structure thermoplastic resin Q | — | — | — | — | — | — | — | 150 | — | — | — | — | — | — | — | — |
| Multi phase structure thermoplastic resin d | — | — | — | — | — | — | — | — | 150 | — | — | — | — | — | — | — |
| Multi phase structure thermoplastic resin g | — | — | — | — | — | — | — | — | — | 150 | — | — | — | — | — | — |
| Low density polyethylene "RexlonF41" | — | — | — | — | — | — | — | — | — | — | 10 | 5 | 100 | — | — | — |
| High density polyethylene "StaflenE780" | — | — | — | — | — | — | — | — | — | — | — | — | — | 10 | — | — |
| Ultra high molecular weight polyethylene"LubmerL4000" | — | — | — | — | — | — | — | — | — | — | — | — | — | — | 10 | — |
| Linear low density polyethylene"LinilexAJ5310" | — | — | — | — | — | — | — | — | — | — | — | — | — | — | — | 10 |
| Dynamic friction coefficient | 0.63 | 0.62 | 0.29 | 0.31 | 0.29 | 0.31 | 0.29 | 0.33 | 0.27 | 0.30 | 0.37 | 0.41 | (*1) | (*1) | (*1) | 0.39 |
| Tensile Strength(kgf/mm2) | 7.1 | 7.1 | 5.8 | 5.7 | 5.8 | 5.8 | 5.7 | 5.5 | 5.6 | 5.3 | 5.5 | 5.7 | — | — | — | 5.4 |
| Flexual modulus (kgf/mm2) | 190 | 189 | 172 | 168 | 171 | 170 | 166 | 166 | 169 | 162 | 158 | 162 | — | — | — | 155 |
| Heat deflection temperature (℃) | 178 | 178 | 142 | 140 | 141 | 142 | 176 | 136 | 140 | 133 | 145 | 151 | — | — | — | 143 |
| Appearance of injection mold | good | good | *A | *A | *A | *A | *A | *A | *A | *A | *C | *B | — | — | — | *C |

(*1) No sample was prepared because it was impossible to make a strand by extrusion.
*A: Slight layer separation was observed. *B: Layer separation was observed.
*C: Strong layer separation was observed.

## Claims

1. A sliding property improving agent comprising a multi-phase structure thermoplastic resin, which consists of 5 to 95 parts by weight of a non-polar α-olefin polymer (a) and 95 to 5 parts by weight of a vinyl polymer (b), polymer (b) being dispersed in polymer (a) or vice versa, and the dispersed polymer has a particle size from 0,001 to 10 μm.

2. The sliding property improving agent of claim 1, wherein said non-polar α-olefin polymer (a) is an ethylene series polymer.

3. The sliding property improving agent of claim 1, wherein said vinyl polymer (b) is selected from aromatic vinyl monomers, acrylic acid ester monomers, methacrylic acid ester monomers, vinyl cyanide monomers, vinyl ester monomers and mixtures thereof.

4. The sliding property improving agent of claim 3, wherein the mean number degree of polymerization of said vinyl monomer (b) is from 10 to 5,000.

5. The sliding property improving agent claim 1, wherein said multi phase structure thermoplastic resin is a graft copolymer consisting of a non-polar α-olefin polymer (a) and a vinyl polymer (b).

6. The sliding property improving agent of claim 1, which further contains from 0.1 to 50% by weight of lubricating materials.

7. The sliding property improving agent of claim 6 wherein said lubricating material is selected from fatty acids, alcohols, fatty acid esters, silicone mineral oil and mixture thereof.

8. Use of the sliding property improving agent of any of claims 1 to 7 for thermoplastic resins.

9. The use according to claim 8, wherein said thermoplastic resins are selected from polyoxymethylene, polycarbonate resins, styrene resins, polyester resins, polyarylene sulfide, polyamide, polyphenylene ether, polyarylate and mixtures thereof.

10. The use according to claim 8, wherein the sliding property improving agent is added to said thermoplastic resins in the range of 0.1 to 50% by weight.

**Patentansprüche**

1. Die Gleitfähigkeit verbessemdes Mittel, umfassend ein thermoplastisches Harz mit Mehrfachphasenstruktur, das zu 5 bis 95 Gewichtsteilen aus einem nichtpolaren α-Olefinpolymer (a) und 95 bis 5 Gewichtsteilen aus einem Vinylpolymer (b) besteht, wobei das Polymer (b) in Polymer (a) dispergiert ist oder andersherum, und wobei das dispergierte Polymer eine Teilchengröße von 0,001 bis 10 μm besitzt.

2. Die Gleitfähigkeit verbessemdes Mittel nach Anspruch 1, wobei das nichtpolare α-Olefinpolymer (a) ein Polymer der Ethylenreihe ist.

3. Die Gleitfähigkeit verbesserndes Mittel nach Anspruch 1, wobei das Vinylpolymer (b) aus aromatischen Vinylmonomeren, Acrylsäureestermonomeren, Methacrylsäureestermonomeren, Vinylcyanidmonomeren, Vinylestermonomeren oder Mischungen hiervon gewählt ist.

4. Die Gleitfähigkeit verbesserndes Mittel nach Anspruch 3, wobei der zahlenmittlere Polymerisationsgrad des Vinylmonomeren (b) 10 bis 5000 beträgt.

5. Die Gleitfähigkeit verbesserndes Mittel nach Anspruch 1, wobei das thermoplastische Harz mit Mehrfachphasenstruktur ein Pfropfcopolymer ist, bestehend aus einem nichtpolaren α-Olefinpolymer (a) und einem Vinylpolymer (b).

6. Die Gleitfähigkeit verbessemdes Mittel nach Anspruch 1, enthaltend weiterhin 0,1 bis 50 Gew.-% Gleitmittelmatedalien.

7. Die Gleitfähigkeit verbesserndes Mittel nach Anspruch 6, wobei das Gleitmittelmaterial aus Fettsäure, Alkohol, Fettsäureester, Silikon, Mineralöl oder Mischungen hiervon gewählt ist.

8. Verwendung des die Gleitfähigkeit verbessernden Mittels nach einem oder mehreren der Ansprüche 1-7 für thermoplastische Harze.

9. Verwendung nach Anspruch 8, wobei die thermoplastischen Harze aus Polyoxymethylen, Polycarbonatharz, Styrolharz, Polyesterharz, Polyarylensulfid, Polyamid, Polyphenylenether, Polyarylat oder Mischungen hiervon gewählt sind.

10. Verwendung nach Anspruch 8, wobei das die Gleitfähigkeit verbessemde Mittel zu den thermoplastischen Harzen im Bereich von 0,1 bis 50 Gew.-% zugegeben wird.

**Revendications**

1. Agent améliorant la propriété de glisse comprenant une résine thermoplastique à structure multiphase, se composant de 5 à 95 parties en poids d'un polymère α-oléfinique (a) non polaire et 95 à 5 parties en poids d'un polymère vinylique (b), le polymère (b) étant dispersé dans le polymère (a) ou vice-versa, et le polymère dispersé ayant une taille de particule de 0,001 à 10 μm.

2. Agent améliorant la propriété de glisse selon la revendication 1, caractérisé en ce que ledit polymère α-oléfinique (a) non polaire est un polymère de la série éthylénique.

3. Agent améliorant la propriété de glisse selon la revendication 1, caractérisé en ce que ledit polymère vinylique (b) est choisi dans le groupe comprenant les monomères vinyliques aromatiques, les monomères d'ester d'acide acrylique, les monomères d'ester d'acide méthacrylique, les monomères de cyanure de vinyle, les monomères d'ester vinylique, ou des mélanges de ceux-ci.

4. Agent améliorant la propriété de glisse selon la revendication 3, caractérisé en ce que le nombre du degré moyen de polymérisation dudit monomère vinylique (b) est compris entre 10 et 5 000.

5. Agent améliorant la propriété de glisse selon la revendication 1, caractérisé en ce que ladite résine thermoplastique à structure multiphase est un copolymère greffé consistant en un polymère α-oléfinique (a) non polaire et un polymère vinylique (b).

6. Agent améliorant la propriété de glisse selon la revendication 1, caractérisé en ce qu'il contient en outre de 0,1 à 50 % en poids de matières lubrifiantes.

7. Agent améliorant la propriété de glisse selon la revendication 6, caractérisé en ce que ladite matière lubrifiante est choisie dans le groupe comprenant des acides gras, des alcools, des esters d'acide gras, de la silicone, des huiles minérales, ou des mélanges de ceux-ci.

8. Utilisation de l'agent améliorant la propriété de glisse selon l'une quelconque des revendications 1 à 7, pour des résines thermoplastiques.

9. Utilisation selon la revendication 8, caractérisée en ce que lesdites résines thermoplastiques sont choisies dans le groupe comprenant des polyoxyméthylènes, des résines polycarbonates, des résines styréniques, des résines polyester, un sulfure de polyarylène, un polyamide, un éther polyphénylène, un polyarylate, ou des mélanges de ceux-ci.

10. Utilisation selon la revendication 8, caractérisée en ce que l'agent améliorant la propriété de glisse est ajouté aux dites résines thermoplastiques dans une proportion de 0,1 à 50 % en poids.